# EUROPEAN PATENT SPECIFICATION

(11) **EP 4 421 730 B1**
(45) Date of publication and mention of the grant of the patent: **14.01.2026**
(21) Application number: 24158423.4
(22) Date of filing: 19.02.2024
(51) Int. Cl.: G06T 5/70, G06T 1/20

(54) **IMAGE SIGNAL PROCESSOR, OPERATING METHOD THEREOF, AND APPLICATION PROCESSOR INCLUDING THE IMAGE SIGNAL PROCESSOR**
BILDSIGNALPROZESSOR, BETRIEBSVERFAHREN DAFÜR UND ANWENDUNGSPROZESSOR MIT DEM BILDSIGNALPROZESSOR
PROCESSEUR DE SIGNAL D'IMAGE, SON PROCÉDÉ DE FONCTIONNEMENT ET PROCESSEUR D'APPLICATION COMPRENANT LE PROCESSEUR DE SIGNAL D'IMAGE

(30) Priority: 23.02.2023 KR 20230024589
(43) Date of publication of application: 28.08.2024
(73) Proprietor: Samsung Electronics Co., Ltd., Suwon-si, Gyeonggi-do 16677 (KR)
(72) Inventor: LEE, Joohyun, 16677 Suwon-si (KR); YOO, Dusic, 16677 Suwon-si (KR); KONG, Juntaek, 16677 Suwon-si (KR)
(74) Representative: Marks & Clerk LLP

(56) References cited:
- US-A1- 2018 130 172
- US-A1- 2021 136 394
- US-A1- 2021 304 366
- US-A1- 2022 103 752

## Description

### BACKGROUND

The present disclosure relates to image signal processing, and more particularly, to an image signal processor for performing image processing on raw image data received from an image sensor, an operating method of the image signal processor, and an application processor including the same.

Image signal processors provided in imaging devices, such as cameras and smartphones, may perform image processing on a raw image provided from an image sensor and generate a converted image, such as an RGB image or a YUV image. The converted image may be compressed and stored in a storage based on a compression technique, such as Joint Photographic Experts Group (JPEG), Moving Picture Experts Group (MPEG), or H.264, or may be displayed on a display device. Image signal processors process an external image signal according to various types of image processing. Because various functions are continuously added to and expanded in image signal processors with the development of technology, the power consumption and data bandwidth of image signal processors increase. US2018/130172 Al describes upscaling and downscaling in a camera architecture. US 2021/136394 Al proposes an encoding and decoding apparatus and method.

### SUMMARY

It is an aspect to provide an image signal processor for decreasing degradation of image quality, power consumption, and a data bandwidth when performing image processing on an input image signal, and an operating method of the image signal processor.

The features of the invention are set out in the claims.

### BRIEF DESCRIPTION OF THE DRAWINGS

Embodiments will be more clearly understood from the following detailed description taken in conjunction with the accompanying drawings, in which:
FIG. 1 is a diagram of an image processing system according to an embodiment;
FIG. 2 is a schematic diagram of an image signal processor according to an embodiment;
FIG. 3A is a schematic diagram illustrating the operation of an image signal processor in a first operation mode, according to an embodiment;
FIG. 3B is a schematic diagram illustrating the operation of an image signal processor in a second operation mode, according to an embodiment;
FIG. 4 is a schematic diagram of an image signal processor according to an embodiment;
FIG. 5A is a schematic block diagram of a decomposition circuit of an image signal processor, according to an embodiment;
FIG. 5B is a schematic block diagram of a decomposition circuit of an image signal processor, according to an embodiment;
FIG. 6 is a schematic block diagram of a recomposition circuit of an image signal processor, according to an embodiment;
FIG. 7 is a schematic block diagram of a noise reduction circuit of an image signal processor, according to an embodiment;
FIG. 8 is a schematic block diagram of an image signal processor according to an embodiment;
FIGS. 9A and 9B illustrate bayer patterns that a raw image signal may have, according to embodiments;
FIG. 10 is a schematic block diagram of an image signal processor according to an embodiment;
FIG. 11 is a schematic block diagram of an image signal processor according to an embodiment;
FIG. 12 is a flowchart of an operating method of an image signal processor, according to an embodiment;
FIG. 13 is a block diagram illustrating an application processor according to an embodiment;
FIG. 14 is a block diagram illustrating an image signal processor and a memory of an application processor, according to an embodiment;
FIG. 15 is a block diagram illustrating an image sensor including an image signal processor, according to an embodiment; and
FIG. 16 is block diagram of a portable terminal including an image signal processor, according to an embodiment.

### DETAILED DESCRIPTION

Hereinafter, various embodiments are described with reference to the accompanying drawings, but those skilled in the art may implement the embodiments in other specific forms without changing the technical or essential features. Therefore, it should be understood that the embodiments described below are illustrative in all respects and not restrictive.

Hereinafter, embodiments are described in detail with reference to the accompanying drawings.

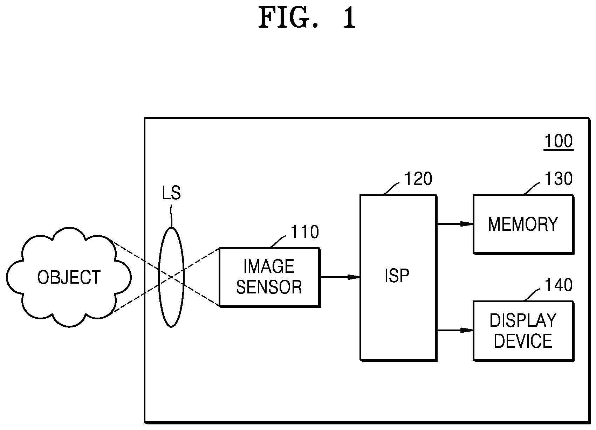

FIG. 1 is a diagram of an image processing system according to an embodiment.

An image processing system 100 may be embedded in or implemented as an electronic device. For example, the electronic device may include a personal computer (PC), an Internet of things (IoT) device, or a portable electronic device. The portable electronic device may for example include a laptop computer, a mobile phone, a smartphone, a tablet PC, a personal digital assistant (PDA), an enterprise digital assistant (EDA), a digital still camera, a digital video camera, an audio device, a portable multimedia player (PMP), a personal navigation device (PND), an MP3 player, a handheld game console, an e-book, or a wearable device.

Referring to FIG. 1, the image processing system 100 may include an image sensor 110, an image signal processor (ISP) 120, a memory 130, and a display device 140.

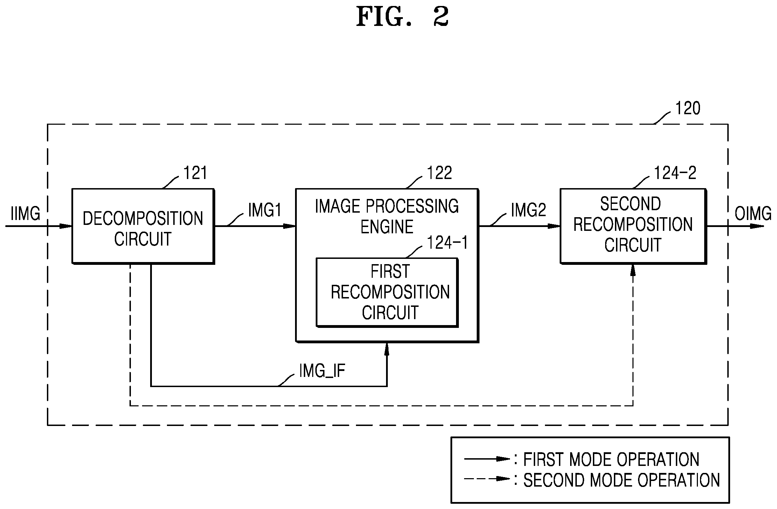

The image sensor 110 may convert an optical signal of an object, which is incident through an optical lens LS, into an electrical signal or an image (i.e., image data). For example, the image sensor 110 may include a pixel array, which includes a plurality of sensing pixels arranged in two dimensions, and a sensing circuit. The pixel array and the sensing circuit may be integrated into a single semiconductor chip. The pixel array may convert optical signals into electrical signals. For example, the pixel array may include a photoelectric conversion element, such as a charge-coupled device (CCD) or a complementary metal-oxide semiconductor (CMOS), or other kinds of photoelectric conversion elements. The sensing circuit may convert an electrical signal from the pixel array into an image and generate an input image signal IIMG (in FIG. 2) corresponding to the image. In description below, the input image signal IIMG may be an input of the ISP 120. The input image signal IIMG may also be referred to as a converted image.

The ISP 120 may perform image processing on the input image signal IIMG from the image sensor 110 and generate an output image signal OIMG (in FIG. 2). For example, the ISP 120 may perform image processing on the input image signal IIMG based on set scaling, white balance, parameters, or the like. The output image signal OIMG may correspond to a color space image, such as an RGB image or a YUV image. The size, e.g., resolution, of the output image signal OIMG may be the same as that of the input image signal IIMG. The output image signal OIMG may be stored in the memory 130. The memory 130 may include volatile memory, such as dynamic random access memory (DRAM) or static RAM (SRAM), or non-volatile memory, such as phase-change RAM (PRAM), resistive RAM (ReRAM), or flash memory. The output image signal OIMG stored in the memory 130 may be used by the image processing system 100 or stored in a storage device.

The ISP 120 may generate a scaled image by increasing or decreasing the size of the output image signal OIMG prior to outputting the output image signal OIMG. For example, the ISP 120 may scale the size, i.e., resolution, of the converted image to meet the resolution of the display device 140, thereby generating a scaled image as the output image signal OIMG. The ISP 120 may provide the scaled image as the output image signal OIMG to the display device 140.

The power consumption and data bandwidth of the ISP 120 for image processing increase with the trend toward the high-pixel density of the image sensor 110. In other words, as the pixel density of the image sensor 110 increase, the power consumption and data bandwidth of the ISP 120 increases. Accordingly, a method of decreasing the size, i.e., resolution, of the input image signal IIMG may be used before image processing is performed on the input image signal IIMG. However, when the amount of data of the input image signal IIMG is decreased to reduce the power consumption and the data bandwidth thereof, image quality loss may occur during a scaling process.

To minimize the image quality loss, the ISP 120, an operating method thereof, and an application processor 200 including the ISP 120, according to various embodiments, may decrease degradation in image quality of the input image signal IIMG by extracting information about image quality loss involved in scaling and image processing from the input image signal IIMG, generating an image information signal IMG_IF (in FIG. 2), and generating the output image signal OIMG by using the image information signal IMG_IF according to an operation mode (e.g., an image quality priority mode (a first mode) or a power priority mode (a second mode)), in addition to a process of decreasing the amount of data of the input image signal IIMG and performing image processing on the input image signal IIMG. Accordingly, when image processing is finally performed on the high-definition input image signal IIMG, power consumption, data bandwidth, and image quality loss may be decreased.

FIG. 2 is a schematic diagram of the ISP 120 according to an embodiment.

The ISP 120 of FIG. 2 may include a decomposition circuit 121, an image processing engine 122including a first recomposition circuit 124-1, and a second recomposition circuit 124-2. In some embodiments, the first recomposition circuit 124-1 may be provided as a separate component from the image processing engine 122. When the operation mode of the ISP 120 of FIG. 2 is the first mode (e.g., the image quality priority mode), the ISP 120 may operate based on the solid line arrows. When the operation mode of the ISP 120 is the second mode (e.g., the power priority mode), the ISP 120 may operate based on the dashed line arrow.

Here, the first mode may refer to the image quality priority mode for decreasing the image quality loss of an output signal during image processing, and the second mode may refer to the power priority mode for decreasing power consumption during the image processing. For example, the ISP 120 may adaptively select an operation mode according to an operation mode set by a user or based on an internal state of the ISP 120.

Referring to FIG. 2, the decomposition circuit 121 may generate a first image signal IMG1 and image information signal IMG_IF by performing down scaling and/or correction information generation on the input image signal IIMG. For example, the first image signal IMG1 may be obtained by down-scaling the input image signal IIMG. Accordingly, an amount of data of the first image signal IMG1 may be less than an amount of data of the input image signal IIMG. In some embodiments, the decomposition circuit 121 may divide the input image signal IIMG by frequency band and use a low-pass filter, thereby generating the first image signal IMG1 having a low-frequency component. In this case, the amount of data of the first image signal IMG1 may be less than the amount of data of the input image signal IIMG. In some embodiments, the image information signal IMG_IF may be generated by extracting a high-frequency component from the input image signal IIMG. The high-frequency component may correspond to correction information for correcting image quality loss involved in scaling and image processing.

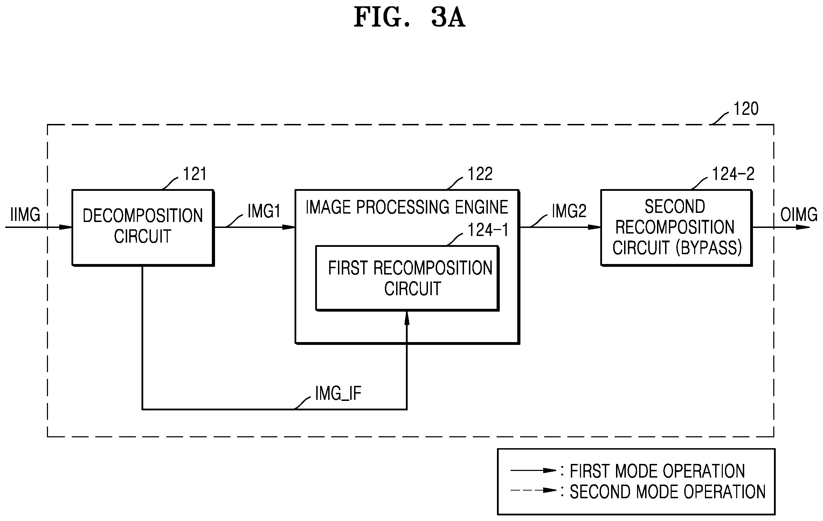

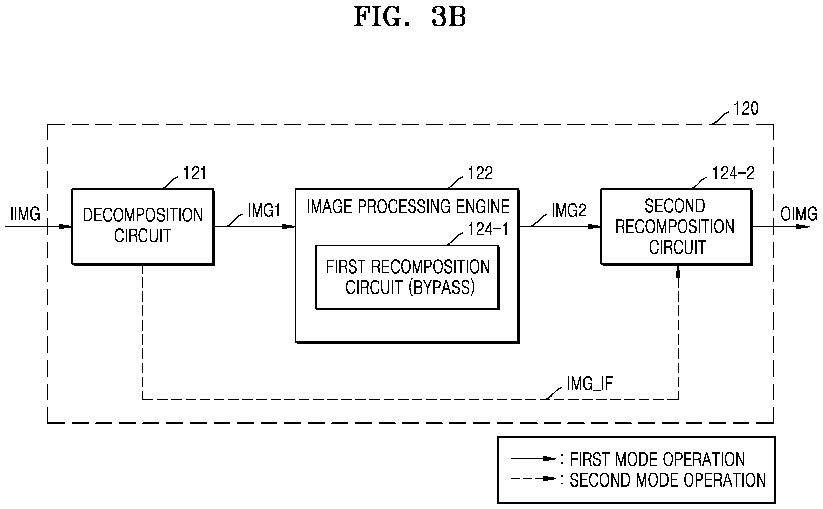

The image processing engine 122 may receive the first image signal IMG1. The image processing engine 122 may include the first recomposition circuit 124-1. The first recomposition circuit 124-1 may generate a target image signal based on the first image signal IMG1. The image processing engine 122 may include a plurality of image modules with high power consumption and computational load and the image modules may generate a second image signal IMG2 by performing various types of image processing on the target image signal. The operation of the first recomposition circuit 124-1 in each operation mode of the ISP 120 is described with reference to FIGS. 3A and 3B below.

The second recomposition circuit 124-2 may generate the output image signal OIMG based on the second image signal IMG2 output from the image processing engine 122. The operation of the second recomposition circuit 124-2 in each operation mode of the ISP 120 is described with reference to FIGS. 3A and 3B below.

As described above, the image information signal IMG_IF may have a high frequency. For example, the image information signal IMG_IF may include information related to an edge of the input image signal IIMG. For example, the decomposition circuit 121 may transmit the image information signal IMG_IF to the first recomposition circuit 124-1 of the image processing engine 122 along the solid line arrow in FIG. 2 in the first mode and may transmit the image information signal IMG_IF to the second recomposition circuit 124-2 along the dashed line arrow in FIG. 2 in the second mode. In some embodiments, the decomposition circuit 121 may transmit the image information signal IMG_IF only to the first recomposition circuit 124-1 of the image processing engine 122 along the solid line arrow in FIG. 2 and not transmit the image information signal IMG_IF to the second recomposition circuit 124-2 in the first mode and may transmit the image information signal IMG_IF to the second recomposition circuit 124-2 along the dashed line arrow in FIG. 2 and not transmit the image information signal IMG_IF to the first recomposition circuit 124-1 in the second mode.

In an embodiment, the decomposition circuit, the image processing engine 122, the first recomposition circuit 124-1, and the second recomposition circuit 124-2 may be implemented by hardware. However, embodiments are not limited thereto. In some embodiments, the decomposition circuit, the image processing engine 122, the first recomposition circuit 124-1, and the second recomposition circuit 124-2 may be implemented by a combination of hardware and software.

According to an embodiment, the decomposition circuit 121 of the ISP 120 may generate the first image signal IMG1 having a smaller amount of data than the input image signal IIMG before the image processing engine 122 performs image processing. In other words, the image processing engine 122 may recompose the image information signal IMG_IF according to an operation mode after performing image processing on the first image signal IMG1 having a relatively small amount of data, and accordingly, the power consumption and computational load of the image processing engine 122 may decrease.

FIG. 3A is a schematic diagram illustrating the operation of an ISP in the first operation mode, according to an embodiment.

In detail, FIG. 3A illustrates the operation of the ISP 120 in the first mode (e.g., the image quality priority mode). Because some operations of the decomposition circuit 121 and the image processing engine 122 in FIG. 3A correspond to the operations of the decomposition circuit 121 and the image processing engine 122 in FIG. 2, redundant descriptions thereof are omitted for conciseness.

When the ISP 120 operates in the first mode (e.g., the image quality priority mode), the first recomposition circuit 124-1 may receive the image information signal IMG_IF from the decomposition circuit 121 and generate a target image signal by recomposing the first image signal IMG1 and the image information signal IMG_IF. In one example, recomposing may include combining the two signals. Although it is described with reference to FIG. 3A that the first recomposition circuit 124-1 generates the target image signal by recomposing the first image signal IMG1 and the image information signal IMG_IF, embodiments are not limited thereto. In some embodiments, the first recomposition circuit 124-1 may generate the target image signal by recomposing the image information signal IMG_IF and the first image signal IMG1 on which at least one kind of image processing (e.g., noise reduction) has been performed by the image processing engine 122 before the recomposition. The image modules of the image processing engine 122 may receive the target image signal and generate the second image signal IMG2 by performing at least one image processing on the target image signal. In the first mode, the second recomposition circuit 124-2 may not receive the image information signal IMG_IF from the decomposition circuit 121 and may generate the output image signal OIMG by outputting the second image signal IMG2. In other words, in the first mode, the second recomposition circuit 124-2 (bypass) may receive the second image signal IMG2 and output (i.e., pass through) the second image signal IMG2 as the output image signal OIMG without performing any recomposition processing on the second image signal IMG2.

Although not shown, the image processing engine 122 may further include a noise reduction circuit and/or a pre-scaler at the front end of the first recomposition circuit 124-1 and a sharpness enhancement circuit at the back end of the first recomposition circuit 124-1.

According to an embodiment, the first recomposition circuit 124-1 of the ISP 120 may generate an target image signal by recomposing the image information signal IMG_IF and the first image signal IMG1 that has been up-scaled by the pre-scaler, and the image processing engine 122 of the ISP 120 may perform sharpness enhancement of the up-scaled target image signal, and therefore, image quality loss involved in image scaling or the like may be decreased.

FIG. 3B is a schematic diagram illustrating the operation of an ISP in the second operation mode, according to an embodiment.

In detail, FIG. 3B illustrates the operation of the ISP 120 in the second mode (e.g., the power priority mode). Because some operations of the decomposition circuit 121 and the image processing engine 122 in FIG. 3B correspond to the operations of the decomposition circuit 121 and the image processing engine 122 in FIG. 2, redundant descriptions thereof are omitted for conciseness.

When the ISP 120 operates in the second mode (e.g., the power priority mode), the first recomposition circuit 124-1 (bypass) may not receive the image information signal IMG_IF from the decomposition circuit 121 and may generate a target image signal by outputting the first image signal IMG1. In other words, in the second mode, the first recomposition circuit 124-1 may receive the first image signal IMG1 and output (i.e., pass through) the first image signal IMG1 as the target image signal without performing any recomposition processing on the first image signal IMG1. Although it is described with reference to FIG. 3B that the first recomposition circuit 124-1 generates the target image signal based on the first image signal IMG1, embodiments are not limited thereto. In some embodiments, the first recomposition circuit 124-1 may generate the target image signal based on the first image signal IMG1, on which the image processing engine 122 has performed at least one image processing (e.g., noise reduction). That is, the image modules of the image processing engine 122 may receive the target image signal (i.e., which is the passed through first image signal IMG1) and generate the second image signal IMG2 by performing at least one image processing on the target image signal. In the second mode, the second recomposition circuit 124-2 may receive the image information signal IMG_IF from the decomposition circuit 121 and generate the output image signal OIMG by recomposing the second image signal IMG2 and the image information signal IMG_IF.

Although not shown, the image processing engine 122 may further include a noise reduction circuit and/or a pre-scaler at the front end of the first recomposition circuit 124-1 and a sharpness enhancement circuit at the back end of the first recomposition circuit 124-1.

According to an embodiment, the ISP 120 may generate the output image signal OIMG by performing different types of image processing based on the first image signal IMG1 having a relatively small amount of data and then finally recomposing a result of the image processing with the image information signal IMG_IF, and therefore, power consumption and data bandwidth during the image processing may be decreased.

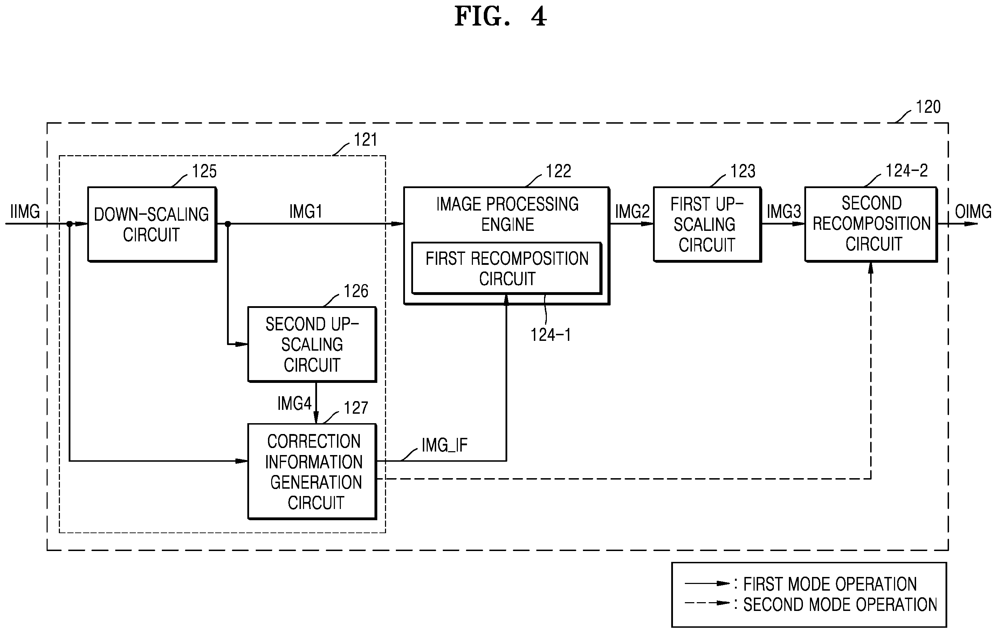

FIG. 4 is a schematic diagram of the ISP 120 according to an embodiment.

Referring to FIG. 4, the ISP 120 may include the decomposition circuit 121, the image processing engine 122 including the first recomposition circuit 124-1, a first up-scaling circuit 123, and the second recomposition circuit 124-2.

When the operation mode of the ISP 120 of FIG. 2 is the first mode (the image quality priority mode), the ISP 120 may operate based on the solid line arrows. When the operation mode of the ISP 120 is the second mode (e.g., the power priority mode), the ISP 120 may operate based on the dashed line arrow.

The decomposition circuit 121 of the ISP 120 may include a down-scaling circuit 125, a second up-scaling circuit 126, and a correction information generation circuit 127. Although it is illustrated in FIG. 4 that the second up-scaling circuit 126 is separate from the correction information generation circuit 127, embodiments are not limited thereto. In some embodiments, the second up-scaling circuit 126 may be included in the correction information generation circuit 127. It is illustrated in FIG. 4 that the second recomposition circuit 124-2 is separate from the first up-scaling circuit 123, but embodiments are not limited thereto. In some embodiments, the first up-scaling circuit 123 may be included in the second recomposition circuit 124-2.

In an embodiment, the down-scaling circuit 125, the image processing engine 122, the first recomposition circuit 124-1, and the second recomposition circuit 124-2, the first up-scaling circuit 123, the second up-scaling circuit 126, and the correction information generation circuit 127 may be implemented by hardware. However, embodiments are not limited thereto. The down-scaling circuit 125, the image processing engine 122, the first recomposition circuit 124-1, the second recomposition circuit 124-2, the first up-scaling circuit 123, the second up-scaling circuit 126, and the correction information generation circuit 127 may be implemented by a combination of hardware and software.

The input image signal IIMG may be input to the down-scaling circuit 125 and the correction information generation circuit 127. The down-scaling circuit 125 may generate the first image signal IMG1 by down-scaling the input image signal IIMG. Accordingly, a resolution of the first image signal IMG1 is lower than a resolution of the input image signal IIMG. For example, the resolution of the first image signal IMG1 may be 640×480, and the resolution of the input image signal IIMG may be 800×600. In some embodiments, the down-scaling circuit 125 may include a low-pass filter and thus generate the first image signal IMG1 having a low-frequency component of the input image signal IIMG.

When the resolution of the input image signal IIMG is decreased by the down-scaling circuit 125, power consumption and bandwidth gain may be the greatest, and accordingly, a low-pass filter using scaling is described as an embodiment. However, embodiments are not limited thereto and, in some embodiments, a low-pass filter using another method (e.g., a method of decreasing the amount of data) other than scaling may be used.

The first image signal IMG1 may be input to the image processing engine 122 and the second up-scaling circuit 126. The second up-scaling circuit 126 may generate a fourth image signal IMG4 by up-scaling the first image signal IMG1. A resolution of the fourth image signal IMG4 may be the same as the resolution of the input image signal IIMG. For example, the resolution of each of the fourth image signal IMG4 and the input image signal IIMG may be 800×600.

The fourth image signal IMG4 and the input image signal IIMG may be input to the correction information generation circuit 127. The correction information generation circuit 127 may generate the image information signal IMG_IF by extracting, from the fourth image signal IMG4 and the input image signal IIMG, correction information related to image quality loss caused by scaling and image processing of the image processing engine 122. The image information signal IMG_IF may have a high frequency. For example, the image information signal IMG_IF including information for compensating for a loss caused by image processing of the image processing engine 122 and scaling may include high-frequency information related to an edge of the input image signal IIMG. In other words, because the image information signal IMG_IF includes information related to image quality loss occurring when the input image signal IIMG undergoes scaling and image processing, the first and second recomposition circuits 124-1 and 124-2 may decrease degradation in image quality of the output image signal OIMG by using the image information signal IMG_IF.

The first recomposition circuit 124-1 of the image processing engine 122 may generate a target image signal based on the first image signal IMG1. For example, the first recomposition circuit 124-1 may receive the image information signal IMG_IF and generate the target image signal by recomposing the first image signal IMG1 and the image information signal IMG_IF when the ISP 120 is in the first mode and may generate the target image signal by outputting the first image signal IMG1 as the target image signal (i.e., passing through the first image signal IMG1 without recomposition) when the ISP 120 is in the second mode. The image processing engine 122 may generate the second image signal IMG2 by performing various types of image processing on the target image signal. Because image quality loss may occur during the image processing, the second image signal IMG2 may have degraded image quality.

The first up-scaling circuit 123 may generate a third image signal IMG3 by up-scaling the second image signal IMG2. Accordingly, a resolution of the third images signal IMG3 may be the same as the resolution of the input image signal IIMG. For example, the resolution of each of the input image signal IIMG and the third image signal IMG3 may be 800×600. However, image quality loss may occur due to scaling. Accordingly, the third image signal IMG3 may have degraded image quality due to image processing and scaling and thus have lower image quality than the input image signal IIMG.

The second recomposition circuit 124-2 may generate the output image signal OIMG based on the third image signal IMG3. For example, when the ISP 120 is in the first mode, the second recomposition circuit 124-2 may generate the output image signal OIMG by outputting the third image signal IMG3 as the output image signal (i.e., passing through the third image signal IMG3 without recomposition). When the ISP 120 is in the second mode, the second recomposition circuit 124-2 may receive the image information signal IMG_IF from the correction information generation circuit 127 and generate the output image signal OIMG by recomposing the third image signal IMG3 and the image information signal IMG_IF. As described above, the third image signal IMG3 may have degraded image quality, and the second recomposition circuit 124-2 may perform correction to minimize degradation in image quality of the third image signal IMG3 by using correction information of the image information signal IMG_IF, wherein the correction information is extracted from the input image signal IIMG and the fourth image signal IMG4.

In some embodiments, the output image signal OIMG may be re-scaled to match the resolution of the display device 140 of an electronic device or the like, which includes the ISP 120.

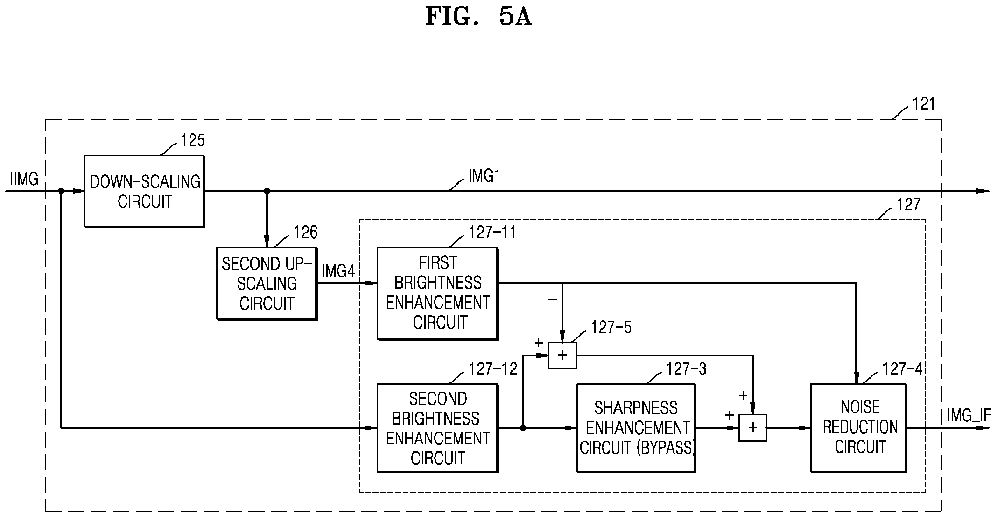

FIG. 5A is a schematic block diagram of a decomposition circuit of an ISP, according to an embodiment.

In detail, FIG. 5A is a block diagram of the decomposition circuit 121 when the ISP 120 is in the first mode (e.g., the image quality priority mode).

The correction information generation circuit 127 may generate the image information signal IMG_IF by performing a correction information generation process to maximally extract information related to the image quality loss of the input image signal IIMG, which is involved in image processing and scaling. The image quality loss involved in scaling and image processing may be related to brightness and/or sharpness.

Referring to FIG. 5A, the decomposition circuit 121 may include the down-scaling circuit 125, the second up-scaling circuit 126, and the correction information generation circuit 127. The correction information generation circuit 127 may include a first brightness enhancement circuit 127-11, a second brightness enhancement circuit 127-12, a differential circuit 127-5, a sharpness enhancement circuit 127-3, and a noise reduction circuit 127-4.

FIG. 5A illustrates an embodiment in which the image information signal IMG_IF may be generated by extracting, from the input image signal IIMG and the fourth image signal IMG4, information about the image quality loss of the third image signal IMG3 that is involved in image processing and scaling.

The differential circuit 127-5 may perform a differential operation on the fourth image signal IMG4 that has been brightness enhanced by the first brightness enhancement circuit 127-11 and the input image signal IIMG that has been brightness enhanced by the second brightness enhancement circuit 127-12 to generate a differential signal. The differential signal from the differential circuit 127-5 may be combined with the input image signal IIMG that has been brightness enhanced by the second brightness enhancement circuit 127-12 and passed through the sharpness enhancement circuit 127-3. In the first mode, the input image signal IIMG that has been brightness enhanced by the second brightness enhancement circuit 127-12 may be output by the sharpness enhancement circuit 127-3 (i.e., without undergoing the sharpness enhancement process of the sharpness enhancement circuit 127-3) and may be combined with the differential signal into a first combination signal. In other words, in the first mode, the sharpness enhancement circuit 127-3 (bypass) may pass through the signal output from the second brightness enhancement circuit 127-12 without performing any sharpness enhancement. In the first mode, at the front end of a sharpness enhancement circuit in the image processing engine 122, image quality loss compensation may be performed on a signal, which has been recomposed with an image information signal by the first recomposition circuit 124-1.

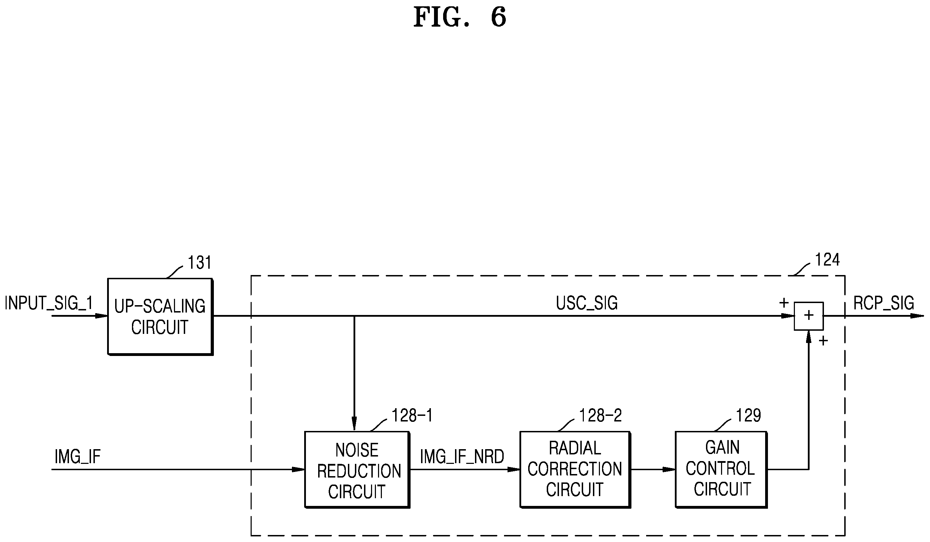

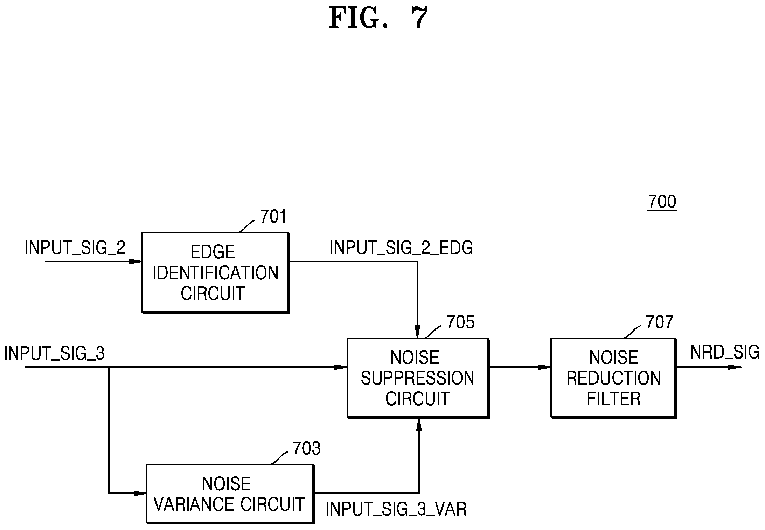

The first combination signal may be noise reduced by the noise reduction circuit 127-4, and the correction information generation circuit 127 may generate the image information signal IMG_IF. The noise reduction circuit 127-4 may receive the first combination signal and the fourth image signal IMG4 that has been brightness enhanced by the first brightness enhancement circuit 127-11 and may output the image information signal IMG_IF. Here, the noise reduction circuit 127-4 may remove and/or suppress noise in the same manner as a noise reduction circuit 128-1 of a recomposition circuit 124 in FIG. 6. The image information signal IMG_IF generated by the correction information generation circuit 127 through the process described above may be a high-frequency signal. The operation of the noise reduction circuit 127-4 is described in detail with reference to FIG. 7.

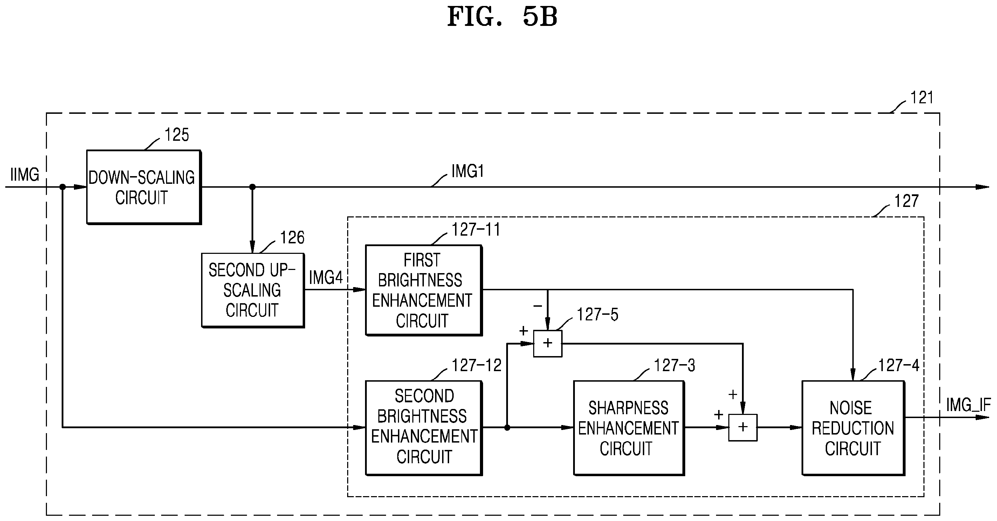

FIG. 5B is a schematic block diagram of a decomposition circuit of an ISP, according to an embodiment.

In detail, FIG. 5B is a block diagram of the decomposition circuit 121 when the ISP 120 is in the second mode (e.g., the power priority mode).

Referring to FIG. 5B, the decomposition circuit 121 may include the down-scaling circuit 125, the second up-scaling circuit 126, and the correction information generation circuit 127. The correction information generation circuit 127 may include the first brightness enhancement circuit 127-11, the second brightness enhancement circuit 127-12, the differential circuit 127-5, the sharpness enhancement circuit 127-3, and the noise reduction circuit 127-4.

FIG. 5B illustrates an embodiment in which the image information signal IMG_IF may be generated by extracting, from the input image signal IIMG and the fourth image signal IMG4, information about the image quality loss of the third image signal IMG3 that is involved in image processing and scaling.

The differential circuit 127-5 may perform a differential operation on the fourth image signal IMG4 that has been brightness enhanced by the first brightness enhancement circuit 127-11 and the input image signal IIMG that has been brightness enhanced by the second brightness enhancement circuit 127-12 to generate a differential signal. The differential signal from the differential circuit 127-5 may be combined with the input image signal IIMG that has been brightness enhanced by the second brightness enhancement circuit 127-12 and sharpness enhanced by the sharpness enhancement circuit 127-3, thereby generating a second combination signal. In the second mode, the input image signal IIMG that has been brightness enhanced by the second brightness enhancement circuit 127-12 may undergo the sharpness enhancement process of the sharpness enhancement circuit 127-3 and then be combined with the differential signal into the second combination signal.

The second combination signal may pass through the noise reduction circuit 127-4, and the correction information generation circuit 127 may generate the image information signal IMG_IF. The noise reduction circuit 127-4 may receive the second combination signal and the fourth image signal IMG4 that has been brightness enhanced by the first brightness enhancement circuit 127-11 and may output the image information signal IMG_IF. Here, the noise reduction circuit 127-4 may remove and/or suppress noise in the same manner as the noise reduction circuit 128-1 of the recomposition circuit 124 in FIG. 6. The image information signal IMG_IF generated by the correction information generation circuit 127 through the process described above may be a high-frequency signal. The operation of the noise reduction circuit 127-4 is described in detail with reference to FIG. 7.

FIG. 6 is a schematic block diagram of a recomposition circuit of an ISP, according to an embodiment.

In detail, FIG. 6 is a schematic block diagram illustrating the recomposition circuit 124 (e.g., the first recomposition circuit 124-1 or the second recomposition circuit 124-2). It is noted that FIG. 6 shows the recomposition circuit 124 when the recomposition circuit 124 is not bypassed (i.e., does not pass through the input signal to the output signal).

When the recomposition circuit 124 corresponds to the first recomposition circuit 124-1, a first input signal INPUT_SIG_1 as a down-scaled signal may refer to the first image signal IMG1 in the image processing engine 122, and a recomposition image signal RCP_SIG may refer to a target image signal.

When the recomposition circuit 124 corresponds to the second recomposition circuit 124-2, the first input signal INPUT_SIG_1 as a down-scaled signal may refer to the second image signal IMG2, and the recomposition image signal RCP_SIG may refer to the output image signal OIMG. An up-scaling circuit 131 may correspond to the first up-scaling circuit 123 in FIG. 4.

Referring to FIG. 6, the image information signal IMG_IF generated by the correction information generation circuit 127 may be input to the recomposition circuit 124 (e.g., the first recomposition circuit 124-1 or the second recomposition circuit 124-2) depending on the operation mode. The recomposition circuit 124 may include at least one of the noise reduction circuit 128-1, a radial correction circuit 128-2, and a gain control circuit 129. For example, when the recomposition circuit 124 corresponds to the first recomposition circuit 124-1, the recomposition circuit 124 may include the noise reduction circuit 128-1. When the recomposition circuit 124 corresponds to the second recomposition circuit 124-2, the recomposition circuit 124 may include the noise reduction circuit 128-1 and at least one of the radial correction circuit 128-2 and the gain control circuit 129.

The recomposition circuit 124 may correct the image information signal IMG_IF. The noise reduction circuit 128-1, the radial correction circuit 128-2, and the gain control circuit 129 may be implemented by hardware. In some embodiments, the noise reduction circuit 128-1, the radial correction circuit 128-2, and the gain control circuit 129 may be implemented by hardware and software.

The recomposition circuit 124 may generate the recomposition image signal RCP_SIG by recomposing the image information signal IMG_IF and the first input signal INPUT_SIG_1. The recomposition circuit 124 may perform, on the image information signal IMG_IF, at least one of noise reduction, radial correction, and gain control to decrease degradation in image quality of the recomposition image signal RCP_SIG.

The noise reduction circuit 128-1 may receive the image information signal IMG_IF and the first input signal INPUT_SIG_1 and remove and/or suppress noise in the image information signal IMG_IF, based on the first input signal INPUT_SIG_1, thereby outputting a noise-reduced image information signal IMG_IF_NRD. Here, the noise reduction circuit 128-1 may remove and/or suppress noise in the same manner as the noise reduction circuit 127-4 of the decomposition circuit 121 of FIGS. 5A and 5B.

Noise may increase due to radial characteristics of a lens. To adjust the noise, the recomposition circuit 124 may include the second recomposition circuit 124-2. The intensity of the image information signal IMG_IF may be adjusted by the radial correction circuit 128-2 to decrease the image quality loss of the first input signal INPUT_SIG_1. Noise may increase from the center of an image toward the edge thereof due to the characteristics of a lens. To adjust the noise, the recomposition circuit 124 may include the second recomposition circuit 124-2. The intensity of the image information signal IMG_IF may be adjusted by the gain control circuit 129 to decrease the image quality loss of the first input signal INPUT_SIG_1.

Although it is illustrated in FIG. 6 that the recomposition circuit 124 is separate from the up-scaling circuit 131, one of ordinary skill in the art will understand that the up-scaling circuit 131 may be included in the recomposition circuit 124 (e.g., the first recomposition circuit 124-1 or the second recomposition circuit 124-2). Even when the up-scaling circuit 131 is included in the recomposition circuit 124 (e.g., the first recomposition circuit 124-1 or the second recomposition circuit 124-2), the up-scaling circuit 131 may generate an up-scaled signal USC_SIG by up-scaling the first input signal INPUT_SIG_1 to have the same resolution as the input image signal IIMG.

FIG. 7 is a schematic block diagram of a noise reduction circuit of an ISP, according to an embodiment.

In detail, a noise reduction circuit 700 of FIG. 7 may correspond to the noise reduction circuit 127-4 in FIGS. 5A and 5B or the noise reduction circuit 128-1 in FIG. 6. When the noise reduction circuit 700 corresponds to the noise reduction circuit 127-4 in FIG. 5A, a second input signal INPUT_SIG_2 may refer to the fourth image signal IMG4 that has been brightness enhanced by the first brightness enhancement circuit 127-11, a third input signal INPUT_SIG_3 may refer to the first combination signal, and a noise reduction signal NRD_SIG may refer to the image information signal IMG_IF. When the noise reduction circuit 700 corresponds to the noise reduction circuit 127-4 in FIG. 5B, the second input signal INPUT_SIG_2 may refer to the fourth image signal IMG4 that has been brightness enhanced by the first brightness enhancement circuit 127-11, the third input signal INPUT_SIG_3 may refer to the second combination signal, and the noise reduction signal NRD_SIG may refer to the image information signal IMG_IF. When the noise reduction circuit 700 corresponds to the noise reduction circuit 128-1 in FIG. 6, the second input signal INPUT_SIG_2 may refer to the third image signal IMG3, the third input signal INPUT_SIG_3 may refer to the image information signal IMG_IF, and the noise reduction signal NRD_SIG may refer to the noise-reduced image information signal IMG_IF_NRD.

Referring to FIG. 7, the noise reduction circuit 700 (e.g., the noise reduction circuit 127-4 in FIGS. 5A and 5B or the noise reduction circuit 128-1 in FIG. 6) may include a noise suppression circuit 705 and a noise reduction filter 707. The noise suppression circuit 705 may include an edge identification circuit 701 and a noise variance circuit 703.

The noise suppression circuit 705 may suppress a noise signal (e.g., an impulse signal) among the high-frequency components of the third input signal INPUT_SIG_3. For example, the noise suppression circuit 705 may identify edges in an image of the second input signal INPUT_SIG_2 by using the edge identification circuit 701 and generate edge index information INPUT_SIG_2_EDG that maps an edge index to each of the edges. The noise suppression circuit 705 may calculate a variance INPUT_SIG_3_VAR of pixel value data in the third input signal INPUT_SIG_3 by using the noise variance circuit 703. The noise suppression circuit 705 may compare the edge index with the variance INPUT_SIG_3_VAR of the pixel value data in the third input signal INPUT_SIG_3, identify a first noise signal (e.g., a signal for which there is no edge index and the variance of the pixel value data exceeds a threshold value) in the third input signal INPUT_SIG_3, and decrease the magnitude of the first noise signal by using a preset method. Although it is described with reference to FIG. 7 that the noise suppression circuit 705 performs noise suppression based on an edge (or an edge index) in the image of the second input signal INPUT_SIG_2, embodiments are not limited thereto. The noise suppression circuit 705 may perform noise suppression (e.g., image guided noise reduction) based on image information included in the third input signal INPUT_SIG_3 in various forms.

The noise reduction filter 707 may calculate a correlation between pixel value data in the third input signal INPUT_SIG_3 that has passed through the noise suppression circuit 705 and neighboring pixel value data and remove a second noise signal from the third input signal INPUT_SIG_3, which has passed through the noise suppression circuit 705, based on the correlation. For example, the noise reduction filter 707 may calculate a difference value between the pixel value data in the third input signal INPUT_SIG_3 that has passed through the noise suppression circuit 705 and the neighboring pixel value data and identify, as the second noise signal, the pixel value data with respect to which the difference value is greater than or equal to the threshold value (e.g. a predetermined value). The noise reduction filter 707 may remove the pixel value data corresponding to the second noise signal from the third input signal INPUT_SIG_3 and output the noise reduction signal NRD_SIG.

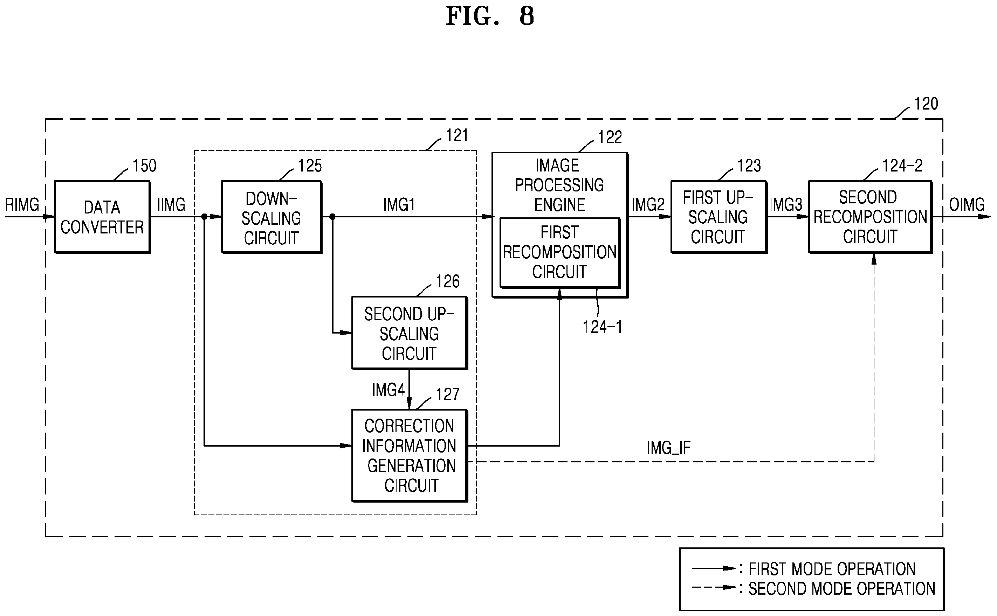

FIG. 8 is a schematic block diagram of the ISP 120 according to an embodiment.

Referring to FIG. 8, the ISP 120 may include the decomposition circuit 121, the image processing engine 122 including the first recomposition circuit 124-1, the first up-scaling circuit 123, the second recomposition circuit 124-2, and a data converter 150. In FIG. 8, like reference designators refer to like components in FIG. 4 and repeated description thereof is omitted for conciseness. When the operation mode of the ISP 120 of FIG. 8 is the first mode, the ISP 120 may operate based on the solid line arrows. When the operation mode of the ISP 120 is the second mode (e.g., the power priority mode), the ISP 120 may operate based on the dashed line arrow.

The data converter 150 may generate the input image signal IIMG by performing data conversion on a raw image signal RIMG generated by the image sensor 110. Due to the operation of the data converter 150, the resolution of the input image signal IIMG may be the same as the resolution of the raw image signal RIMG and the amount of data of the input image signal IIMG may be greater than an amount of data of the raw image signal RIMG. Due to the data conversion of the data converter 150, a color space of the raw image signal RIMG may be different from a color space of the input image signal IIMG. For example, the raw image signal RIMG may have a bayer pattern, and the input image signal IIMG may have an RGB or YUV pattern. When a bayer pattern is converted into an RGB pattern, the amount of data may increase.

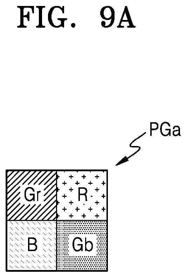

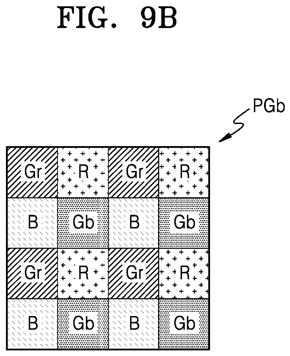

FIGS. 9A and 9B illustrate bayer patterns that a raw image signal may have, according to embodiments.

Referring to FIGS. 9A and 9B, a bayer pattern may refer to a pattern in which 50 % green, 25 % red, and 25 % blue are alternately arranged.

Referring to FIG. 9A, a pixel group PGa may be configured in a 2×2 bayer pattern. The pixel group PGa may include a first green pixel Gr, a red pixel R, a second green pixel Gb, and a blue pixel B. The first green pixel Gr and the second green pixel Gb may be arranged in a diagonal direction, and the red pixel R and a blue pixel B are arranged in a diagonal direction.

Referring to FIG. 9B, a pixel group PGb may be configured in a 4×4 bayer pattern. The pixel group PGb may include four first green pixels Gr, four red pixels R, four second green pixels Gb, and four blue pixels B. Besides those above, a pixel group may be configured in bayer patterns of various sizes.

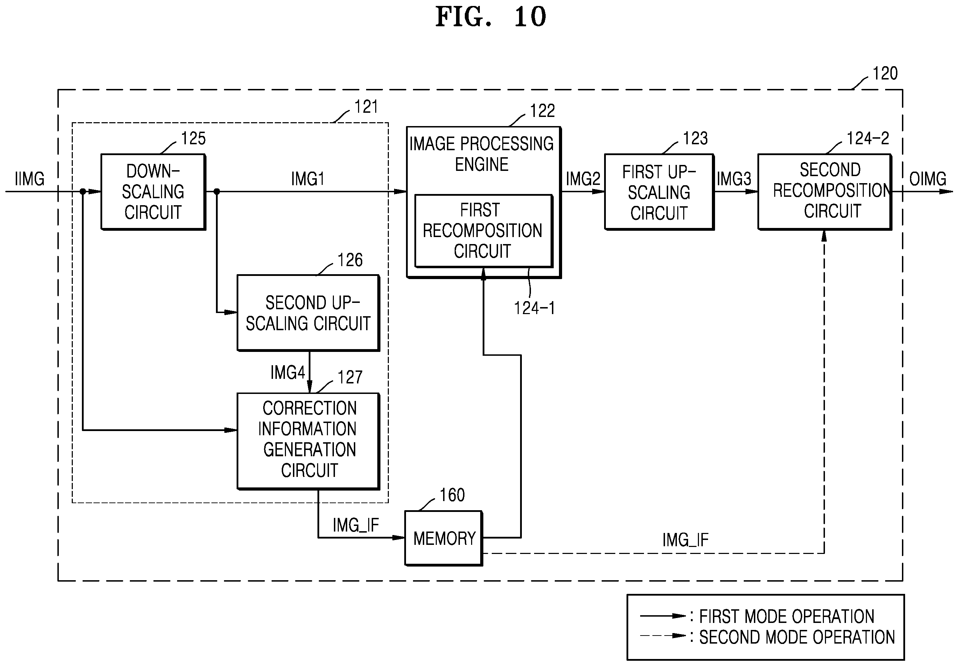

FIG. 10 is a schematic block diagram of the ISP 120 according to an embodiment.

Referring to FIG. 10, the ISP 120 may include the decomposition circuit 121, the image processing engine 122 including the first recomposition circuit 124-1, the first up-scaling circuit 123, the second recomposition circuit 124-2, and a memory 160. In FIG. 10, like reference designators refer to like components in FIG. 4 and repeated description thereof is omitted for conciseness. When the operation mode of the ISP 120 of FIG. 10 is the first mode, the ISP 120 may operate based on the solid line arrows. When the operation mode of the ISP 120 is the second mode (e.g., the power priority mode), the ISP 120 may operate based on the dashed line arrow.

The decomposition circuit 121 may generate the first image signal IMG1 and the image information signal IMG_IF from the input image signal IIMG. The image information signal IMG_IF generated by the decomposition circuit 121 may be generated by the correction information generation circuit 127 (e.g., by at least one of the first and second brightness enhancement circuits 127-11 and 127-12, the sharpness enhancement circuit 127-3, and noise reduction circuit 127-4 in FIGS. 5A and 5B, which may be included in the decomposition circuit 121).

The image information signal IMG_IF may include correction information for decreasing image quality loss involved in image processing and scaling. The image information signal IMG_IF may be input to the first recomposition circuit 124-1 of the image processing engine 122 together with the first image signal IMG1 in the first mode and input to the second recomposition circuit 124-2 together with the third image signal IMG3 in the second mode. As described above with respect to FIG. 4, the image information signal IMG_IF may be directly transmitted from the decomposition circuit 121 to the first recomposition circuit 124-1 or the second recomposition circuit 124-2. As shown in FIG. 10, in some embodiments, the image information signal IMG_IF may be stored in the memory 160 of the ISP 120 and then transmitted from the memory 160 to the first recomposition circuit 124-1 or the second recomposition circuit 124-2 according to the operation mode of the ISP 120. In this configuration, the image information signal IMG_IF transmitted from the memory 160 and the first image signal IMG1 may be simultaneously input to the first recomposition circuit 124-1 in the first mode. However, embodiments are not limited thereto. The image information signal IMG_IF and the first image signal IMG1 may be input to the first recomposition circuit 124-1 at a time interval. In some embodiments, the time interval may be set by a user. In the second mode, the image information signal IMG_IF transmitted from the memory 160 and the third image signal IMG3 may be simultaneously input to the second recomposition circuit 124-2. However, embodiments are not limited thereto. The image information signal IMG_IF and the third image signal IMG3 may be input to the second recomposition circuit 124-2 at a time interval. In some embodiments, the time interval may be set by the user. In some embodiments, the time interval for the second mode may be different than the time interval for the first mode.

For example, the memory 160 may include volatile memory, such as DRAM or SRAM, or non-volatile memory, such as PRAM, ReRAM, or flash memory.

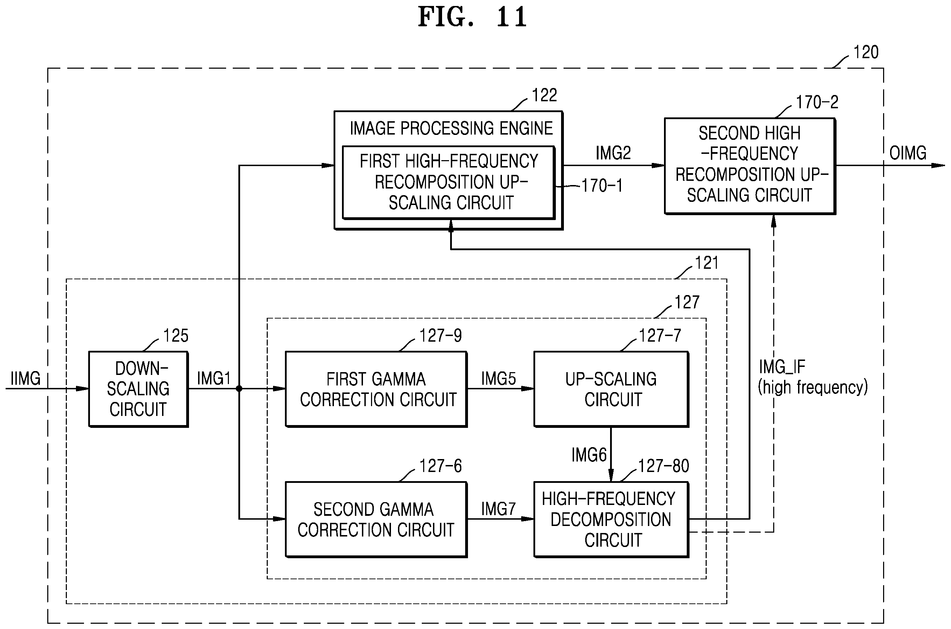

FIG. 11 is a schematic block diagram of the ISP 120 according to an embodiment.

Referring to FIG. 11, the ISP 120 may include the down-scaling circuit 125, a first gamma correction circuit 127-9, a second gamma correction circuit 127-6, an up-scaling circuit 127-7, the image processing engine 122 including a first high-frequency recomposition up-scaling circuit 170-1, a high-frequency decomposition circuit 127-80, and a second high-frequency recomposition up-scaling circuit 170-2. When the operation mode of the ISP 120 of FIG. 11 is the first mode (e.g., the image quality priority mode), the ISP 120 may operate based on the solid line arrows. When the operation mode of the ISP 120 is the second mode (e.g., the power priority mode), the ISP 120 may operate based on the dashed line arrow.

The down-scaling circuit 125 may generate the first image signal IMG1 by down-scaling the input image signal IIMG. The first image signal IMG1 may be input to the image processing engine 122, the first gamma correction circuit 127-9, and the second gamma correction circuit 127-6. The image processing engine 122 may generate the second image signal IMG2. The first gamma correction circuit 127-9 may generate a fifth image signal IMG5. The second gamma correction circuit 127-6 may generate a seventh image signal IMG7. The up-scaling circuit 127-7 may generate a sixth image signal IMG6 by up-scaling the fifth image signal IMG5. The high-frequency decomposition circuit 127-80 may generate the image information signal IMG_IF by performing Gaussian filtering and a differential operation on the sixth image signal IMG6 and the seventh image signal IMG7 by using a Gaussian filter and a plurality of differential circuits.

When the operation mode of the ISP 120 is the first mode, the first high-frequency recomposition up-scaling circuit 170-1 may generate the second image signal IMG2 by recomposing and up-scaling the first image signal IMG1 and the image information signal IMG_IF. The resolution of the second image signal IMG2 may be the same as that of the input image signal IIMG. Thereafter, the resolution of the second image signal IMG2 may be adjusted to display the second image signal IMG2 on a display. The image processing engine 122 may perform image processing desired by a user.

When the operation mode of the ISP 120 is the second mode, the second high-frequency recomposition up-scaling circuit 170-2 may generate the output image signal OIMG by recomposing and up-scaling the second image signal IMG2 and the image information signal IMG_IF. The resolution of the output image signal OIMG may be the same as that of the input image signal IIMG. Thereafter, the resolution of the output image signal OIMG may be adjusted to display the output image signal OIMG on a display. The image processing engine 122 may perform various image processing.

The first gamma correction circuit 127-9 and the second gamma correction circuit 127-6 may correct an overall luminance of an image to reduce non-linear characteristics of hardware. In other words, the first gamma correction circuit 127-9 and the second gamma correction circuit 127-6 may correct a loss related to a luminance of the first image signal IMG1, which may be caused by the down-scaling of the down-scaling circuit 125.

The resolution of the sixth image signal IMG6 generated by the up-scaling circuit 127-7 may be the same as that of the input image signal IIMG.

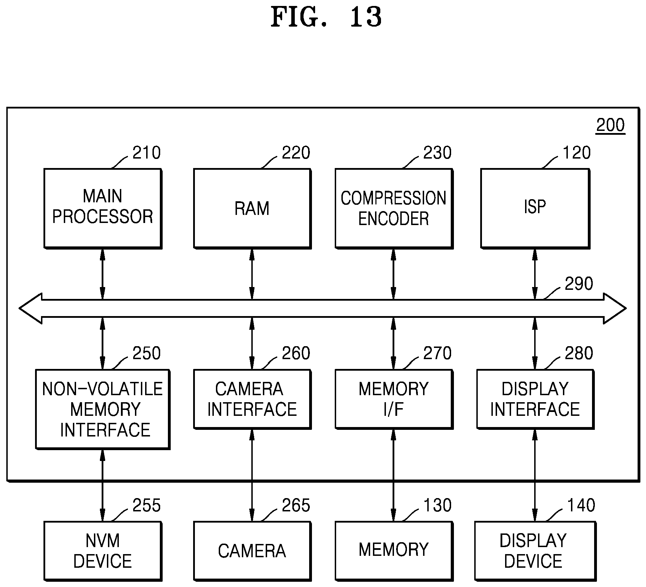

The position of each of the up-scaling circuit 127-7 and the down-scaling circuit 125 may vary with the ISP 120, an operating method of the ISP 120, or a design of an application processor 200 (in FIG. 13) including the ISP 120.

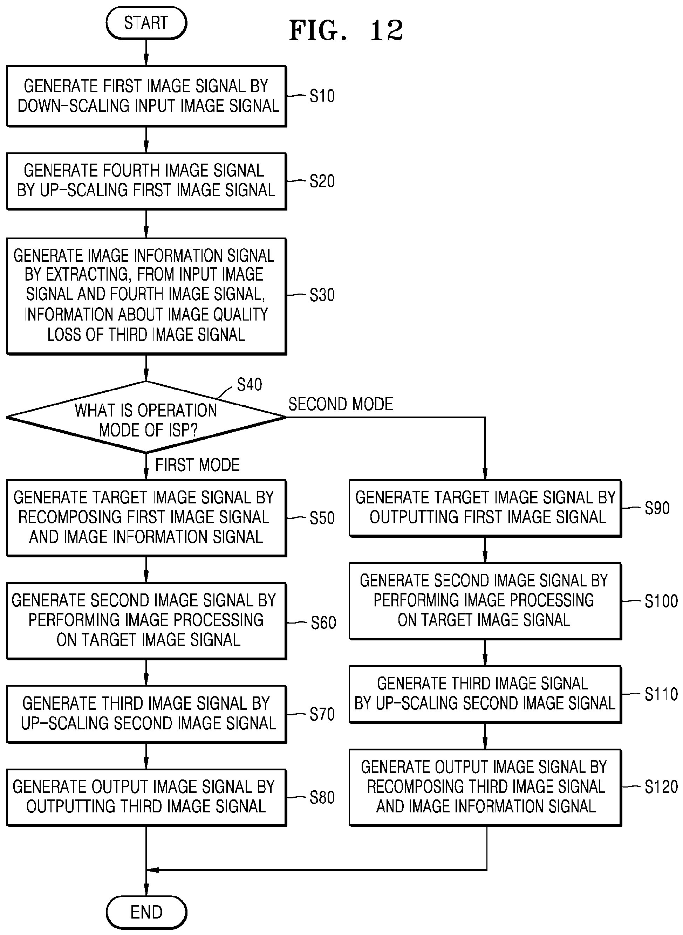

FIG. 12 is a flowchart of an operating method of an ISP, according to an embodiment.

As discussed above, the ISP 120 (in FIG. 1) may receive an input image signal IIMG. For example, the image sensor 110 (in FIG. 1) may generate the input image signal IIMG, and the input image signal IIMG may be input to the ISP 120.

Referring to FIG. 12, the ISP 120 may generate a first image signal IMG1 by down-scaling the input image signal IIMG in operation S10. For example, as a result of down-scaling the input image signal IIMG, the amount of data of the first image signal IMG1 may be less than the amount of data of the input image signal IIMG.

The ISP 120 may generate a fourth image signal IMG4 by up-scaling the first image signal IMG1 in operation S20. For example, due to the up-scaling, the resolution of the fourth image signal IMG4 may be the same as that of the input image signal IIMG.

The ISP 120 may generate an image information signal IMG_IF by extracting information about the image quality loss of a third image signal IMG3 from the input image signal IIMG and the fourth image signal IMG4 in operation S30. For example, the image information signal IMG_IF may be generated by extracting information about the image quality loss of the third image signal IMG3 by performing at least one of brightness enhancement, sharpness enhancement, and noise reduction filtering on the fourth image signal IMG4 and the input image signal IIMG. However, embodiments are not limited thereto. That is, the generating of the image information signal IMG_IF by extracting the information about the image quality loss of the third image signal IMG3 is not limited to brightness enhancement, sharpness enhancement, and noise reduction filtering. There may be a plurality of different processing steps for extracting image information related to image quality loss occurring for various reasons during scaling and image processing. The image information signal IMG_IF may include a high-frequency component of a raw image, which is used to correct the image quality loss caused by scaling and/or image processing.

The ISP 120 may identify an operation mode thereof. That is, the ISP 120 may determine whether the operation mode is the first mode or the second mode in operation S40. The ISP 120 may select an operation mode according to a user's mode selection or according to an internal state (e.g., power shortage) of the ISP 120, and operate in the selected operation mode. When the operation mode of the ISP 120 is a first mode (e.g., the image quality priority mode), operations S50 to S80 may be performed. When the operation mode of the ISP 120 is a second mode (e.g., the power priority mode), operations S90 to S120 may be performed.

When the operation mode of the ISP 120 is the first mode (e.g., the image quality priority mode), the ISP 120 may generate a target image signal by recomposing the first image signal IMG1 and the image information signal IMG_IF in operation S50. For example, the generating of the target image signal may include performing at least one of noise reduction, radial correction, and gain control on the image information signal IMG_IF. Here, the ISP 120 may generate the target image signal by recomposing the first image signal IMG1 and the image information signal IMG_IF based on the descriptions given above with reference to FIG. 6 and may perform the noise reduction based on the descriptions given above with reference to FIG. 7.

The ISP 120 may generate a second image signal IMG2 by performing image processing on the target image signal in operation S60. For example, the target image signal may be processed by the image processing engine 122 including a plurality of image processing modules.

The ISP 120 may generate the third image signal IMG3 by up-scaling the second image signal IMG2 in operation S70. For example, due to the up-scaling, the resolution of the third image signal IMG3 may be greater than that of the second image signal IMG2 and equal to that of the input image signal IIMG.

The ISP 120 may generate an output image signal OIMG by outputting the third image signal IMG3 in operation S80. For example, in the first mode, the ISP 120 may output the third image signal IMG3 as the output image signal OIMG. That is, the third image signal IMG3 may be output as the output image signal OIMG without performing recomposition of the third image signal IMG3 and the image information signal IMG_IF.

When the operation mode of the ISP 120 is a second mode (e.g., the power priority mode), the ISP 120 may generate a target image signal by outputting the first image signal IMG1 in operation S90. For example, the ISP 120 may output the first image signal IMG1 as the target image signal. That is, the first image signal IMG1 may be output as the target image signal without performing recomposition of the third image signal IMG3 and the image information signal IMG_IF.

The ISP 120 may generate the second image signal IMG2 by performing image processing on the target image signal in operation S100. For example, the target image signal may be processed by the image processing engine 122 including a plurality of image processing modules.

The ISP 120 may generate the third image signal IMG3 by up-scaling the second image signal IMG2 in operation S110. For example, due to the up-scaling, the resolution of the third image signal IMG3 may be greater than that of the second image signal IMG2 and equal to that of the input image signal IIMG.

The ISP 120 may generate the output image signal OIMG by recomposing the third image signal IMG3 and the image information signal IMG_IF in operation S120. For example, the generating of the output image signal OIMG may include performing at least one of nose reduction, radial correction, and gain control on the image information signal IMG_IF. Here, the ISP 120 may generate the output image signal OIMG by recomposing the third image signal IMG3 and the image information signal IMG_IF based on the descriptions given above with reference to FIG. 6 and may perform the noise reduction based on the descriptions given above with reference to FIG. 7.

FIG. 13 is a block diagram illustrating the application processor 200 according to an embodiment.

Referring to FIG. 13, the application processor 200 may include a main processor 210, a RAM 220, a compression encoder 230, the ISP 120, a non-volatile memory interface 250, a camera interface 260, a memory interface 270, and a display interface 280. The elements (i.e., 210, 220, 230, 120, 250, 260, 270, and 280) of the application processor 200 may exchange data with each other through a bus 290.

The main processor 210 may generally control operations of the application processor 200. For example, the main processor 210 may include a central processing unit (CPU), a microprocessor, or the like. According to an embodiment, the main processor 210 may be formed as a single computing component, i.e., a multi-core processor, which has at least two independent processors (or cores). The main processor 210 may execute or process programs and/or data, which are stored in the RAM 220 (or read-only memory (ROM)).

The RAM 220 may temporarily store programs, data, and/or instructions. According to an embodiment, the RAM 220 may include DRAM or SRAM. The RAM 220 may temporarily store images that are input or output through interfaces (e.g., 250, 260, 270, and 280) or generated by the ISP 120 or the main processor 210.

In an embodiment, the application processor 200 may further include a ROM. The ROM may store continuously used programs and/or data. The ROM may include erasable programmable ROM (EPROM) or electrically erasable programmable ROM (EEPROM).

The non-volatile memory interface 250 may interface data input from or output to a non-volatile memory (NVM) device 255. For example, the non-volatile memory device 255 may include a memory card, such as a multimedia card (MMC), an embedded MMC (eMMC), a secure digital (SD) card, or a micro SD card.

The camera interface 260 may interface data (e.g., the raw image signal RIMG or the input image signal IIMG) input from a camera 265 outside the application processor 200. The camera 265 may generate data corresponding to an image captured by a plurality of photosensitive devices. The raw image signal RIMG received through the camera interface 260 may be provided to the ISP 120 or stored in the memory 130 through the memory interface 270.

The memory interface 270 may interface data input from or output to the memory 130 outside the application processor 200. According to an embodiment, the memory 130 may include volatile memory, such as DRAM or SRAM, or non-volatile memory, such as ReRAM, PRAM, or NAND flash memory.

The display interface 280 may interface data (e.g., the output image signal OIMG) output to the display device 140. The display device 140 may output data corresponding to an image through a display, such as a liquid crystal display (LCD) or an active matrix organic light emitting diode (AMOLED).

The compression encoder 230 may encode an image and output an encoded image, i.e., a compressed image. The compression encoder 230 may encode a converted image, which is output from the ISP 120 or stored in the memory 130. In an embodiment, the compression encoder 230 may include a Joint Photographic Experts Group (JPEG) module. The JPEG module may output a JPEG image. The JPEG image may be stored in the non-volatile memory device 255.

The ISP 120 may generate a processed image signal by performing image processing (e.g., image processing for decreasing image quality loss caused by scaling or the like by recomposing image correction information according the operation mode of the ISP 120) on an image, e.g., the raw image signal RIMG or the input image signal IIMG, provided from a camera (or the image sensor 110) and store the processed image signal in the memory 130 or may scale a converted image and provide a scaled image to the display device 140. In some embodiments, the ISP 120 may correspond to the ISP 120 described above with respect to FIGS. 1-12.

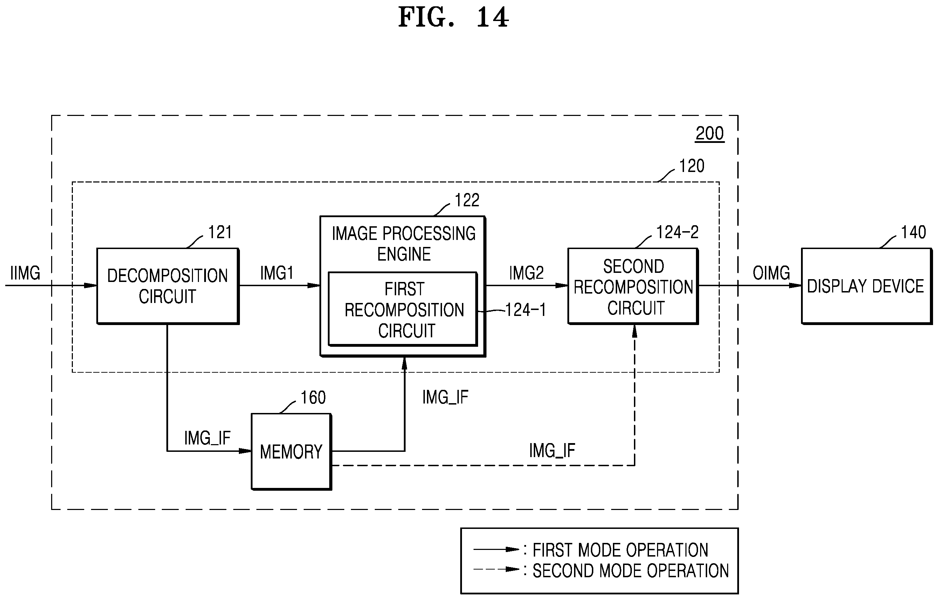

FIG. 14 is a block diagram illustrating the ISP 120 and the memory 160 of the application processor 200, according to an embodiment.

The application processor 200 may include the ISP 120 and the memory 160. The ISP 120 may include the decomposition circuit 121, the image processing engine 122 including the first recomposition circuit 124-1, and the second recomposition circuit 124-2. In FIG. 14, like reference designators refer to like components and repeated description thereof is omitted for conciseness. When the operation mode of the ISP 120 in FIG. 14 is the first mode, the ISP 120 may operate based on the solid line arrows. When the operation mode of the ISP 120 is the second mode (e.g., the power priority mode), the ISP 120 may operate based on the dashed line arrow.

The image information signal IMG_IF generated by the decomposition circuit 121 of the ISP 120 may be stored in the memory 160 outside the ISP 120. The application processor 200 (e.g., the main processor 210) may read the image information signal IMG_IF from the memory 160 and transmit the read image information signal IMG_IF to the first or second recomposition circuit 124-1 or 124-2 at the timing when the first image signal IMG1 is input to the first recomposition circuit 124-1 or at the timing when the second image signal IMG2 is input to the second recomposition circuit 124-2.

For example, the memory 160 may include volatile memory, such as DRAM or SRAM, or non-volatile memory, such as PRAM, ReRAM, or flash memory.

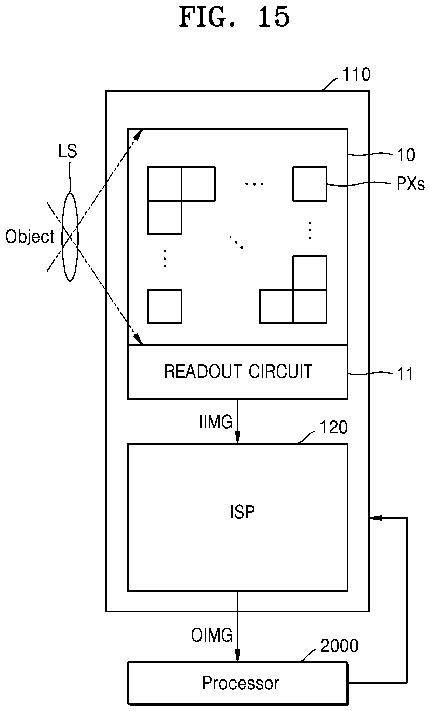

FIG. 15 is a block diagram illustrating the image sensor 110 including the ISP 120, according to an embodiment. The processor 2000 of FIG. 15 may correspond to the main processor 210 of FIG. 13.

The image sensor 110 may convert an optical signal of an object, which is incident through an optical lens LS, into image data. The image sensor 110 may be mounted on an electronic device that has a low image or optical sensing function. For example, the image sensor 110 may be mounted on an electronic device, such as a digital still camera, a digital video camera, a smartphone, a wearable device, an IoT device, a tablet PC, a PDA, a PMP, or a navigation device. The image sensor 110 may be mounted on an electronic device provided as a component of an electronic vehicle, furniture, a manufacturing facility, a door, or various kinds of measuring equipment.

Referring to FIG. 15, the image sensor 110 may include a pixel array 10, a readout circuit 11, and the ISP 120. In an embodiment, the pixel array 10, the readout circuit 11, and the ISP 120 may be implemented in a single semiconductor chip or module. In an embodiment, the pixel array 10 and the readout circuit 11 may be implemented in a single semiconductor chip, and the ISP 120 may be implemented in a separate semiconductor chip.

For example, the pixel array 10 may include a photoelectric conversion element, such as a CCD or a CMOS, or other kinds of photoelectric conversion elements. The pixel array 10 may include a plurality of sensing pixels PXs converting optical signals (or light) into electrical signals. The sensing pixels PXs may be arranged in rows and columns. Each of the sensing pixels PXs may include a photosensitive device. For example, the photosensitive device may include a photodiode, an organic photodiode, a phototransistor, a photogate, or a pinned photodiode.

The readout circuit 11 may convert electrical signals received from the pixel array 10 into image data. The readout circuit 11 may amplify the electrical signals and analog-to-digital convert an amplified electrical signals. The image data generated by the readout circuit 11 may include a plurality of pixels respectively corresponding to the sensing pixels PXs. Here, the sensing pixels PXs of the pixel array 10 may correspond to a physical structure that generate a signal according to incident light, and the pixels of the image data may represent data corresponding to the sensing pixels PXs. The readout circuit 11 may form a sensing core together with the pixel array 10.

In some embodiments, the data converter 150 (see FIG. 8) may be added between the readout circuit 11 and the ISP 120. The data converter 150 may convert the raw image signal RIMG output from the readout circuit 11 into the input image signal IIMG that has the same resolution as the raw image signal RIMG and a larger amount of data than the raw image signal RIMG. The raw image signal RIMG may be converted by the data converter 150 into the input image signal IIMG that has a different color space than the raw image signal RIMG. For example, the raw image signal RIMG may have a bayer pattern, and the input image signal IIMG may have an RGB or YUV pattern.

The ISP 120 may perform image processing on image data, i.e., raw image data, which is output from the readout circuit 11. For example, the ISP 120 may perform image processing, such as bad pixel correction, remosaicing, or denoising, on the image data.

To decrease image quality loss involved in scaling and image processing, the ISP 120 may include the decomposition circuit 121, the image processing engine 122 including the first recomposition circuit 124-1, and the second recomposition circuit 124-2, as shown in FIG. 2. As shown in FIG. 8, the decomposition circuit 121 may include the down-scaling circuit 125, the second up-scaling circuit 126, and the correction information generation circuit 127. The correction information generation circuit 127 may generate the image information signal IMG_IF including information for correcting the image quality loss. When the operation mode of the ISP 120 is the first mode, the first recomposition circuit 124-1 may recompose the first image signal IMG1 with degraded image quality, based on the image information signal IMG_IF, thereby decreasing the image quality loss. When the operation mode of the ISP 120 is the second mode, the second recomposition circuit 124-2 may recompose the third image signal IMG3 with degraded image quality, based on the image information signal IMG_IF, thereby generating the output image signal OIMG with minimal degradation in image quality.

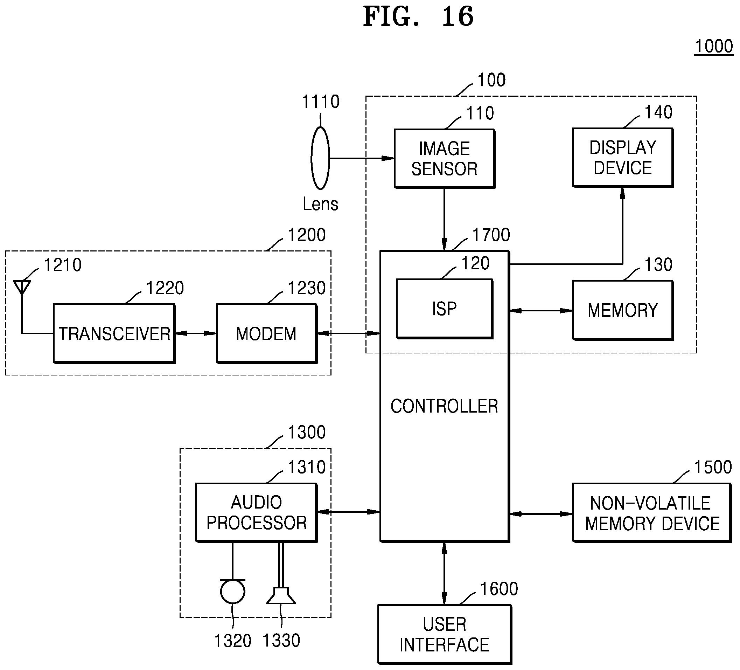

FIG. 16 is block diagram of a portable terminal including the ISP 120, according to an embodiment.

Referring to FIG. 16, a portable terminal 1000 according to an embodiment may include the image processing system 100, a wireless transceiver 1200, an audio processing unit 1300, a non-volatile memory device 1500, a user interface 1600, and a controller 1700.

The image processing system 100 may include a lens 1110, the image sensor 110, the display device 140, the memory 130, and the ISP 120. As shown in FIG. 16, the ISP 120 may be implemented as a part of the controller 1700.

The ISP 120 may generate a converted image by performing image processing on an image, e.g., the input image signal IIMG (or the raw image signal RIMG), provided from the image sensor 110. At this time, the ISP 120 may decrease power consumption, data bandwidth, and image quality loss during the image processing, according to various embodiments. The ISP 120 may store the converted image in the memory 130 or may scale the converted image and provide a scaled image to the display device 140.

The wireless transceiver 1200 may include an antenna 1210, a transceiver 1220, and a modem 1230. The audio processing unit 1300 may include an audio processor 1310, a microphone 1320, and a speaker 1330. The non-volatile memory device 1500 may be provided as a memory card, such as an MMC, an eMMC, an SD card, or a micro SD card.

The user interface 1600 may include various kinds of devices, such as a keyboard, a curtain key panel, a touch panel, a fingerprint sensor, and a microphone, which may receive a user input. The user interface 1600 may receive a user input and provide a signal corresponding to the user input to the controller 1700.

The controller 1700 may generally control operations of the portable terminal 1000 and may be provided as a system-on-chip (SoC) that drives an application program, an operating system (OS), or the like. A kernel of the OS driven by the SoC may include a device driver, which controls an input/output scheduler and the non-volatile memory device 1500.

While various embodiments have been particularly shown and described with reference to the drawings, it will be understood that various changes in form and details may be made therein without departing from the scope of the following claims.

## Claims

1. An image signal processor (120) comprising:
a down-scaling circuit (125) configured to generate a first image signal (IMG1) by down-scaling an input image signal (IIMG);
an image processing engine (122) including a first recomposition circuit (124-1) configured to generate a target image signal based on the first image signal (IMG1), and a plurality of processing modules configured to generate a second image signal (IMG2) by performing at least one image processing on the target image signal;
a first up-scaling circuit (123) configured to generate a third image signal (IMG3) by up-scaling the second image signal (IMG2);
a second recomposition circuit (124-2) configured to generate an output image signal (OIMG) based on the third image signal (IMG3);
**characterised by**,
a second up-scaling circuit (126) configured to generate a fourth image signal (IMG4) by up-scaling the first image signal (IMG1); and
a correction information generation circuit (127) configured to:
generate an image information signal (IMG_IF) by extracting, from the input image signal (IIMG) and the fourth image signal (IMG4), information about an image quality loss of the first image signal (IMG1), wherein the image information signal (IMG_IF) includes information representing a high-frequency component of the input image signal (IIMG), corresponding to correction information for correcting image quality loss involved in scaling and image processing;
in a first mode, transmit the image information signal (IMG_F) to the first recomposition circuit (124-1), wherein the first mode includes an image quality priority mode for decreasing image quality loss of the output signal (OIMG) during image processing; and
in a second mode, transmit the image information signal (IMG _F) to the second recomposition circuit (124-2), wherein the second mode includes a power priority mode for decreasing power consumption during image processing.

2. The image signal processor of claim 1, wherein, in the first mode, the first recomposition circuit (124-1) is further configured to generate the target image signal by recomposing the first image signal (IMG1) and the image information signal (IMG_IF).

3. The image signal processor of claim 2, wherein, in the first mode, the second recomposition circuit (124-2) is further configured to output the third image signal (IMG3) as the output image signal (OIMG).

4. The image signal processor of any preceding claim, wherein, in the second mode, the first recomposition circuit (124-1) is further configured to output the first image signal (IMG1) as the target image signal, and
the second recomposition circuit (124-2) is further configured to generate the output image signal (OIMG) by recomposing the third image signal (IMG3) and the image information signal (IMG_IF).

5. The image signal processor of any preceding claim, wherein, in the first mode, the correction information generation circuit (127) is further configured to perform at least one of noise reduction and brightness enhancement corresponding to the at least one image processing performed by the image processing engine (122).

6. The image signal processor of any preceding claim, wherein, in the second mode, the correction information generation circuit (127) is further configured to perform at least one of noise reduction, brightness enhancement, and sharpness enhancement, and
wherein, when the brightness enhancement and the sharpness enhancement are performed, each of the brightness enhancement and the sharpness enhancement corresponds to the at least one image processing performed by the image processing engine (122).

7. The image signal processor of any preceding claim, wherein one of the first recomposition circuit (124-1) and the second recomposition circuit (124-2) includes at least one of a radial correction circuit (128-2) configured to correct the image information signal (IMG_IF), a gain control circuit (129), and a noise reduction circuit (128-1).

8. The image signal processor of claim 7, wherein the image signal processor further includes a noise suppression circuit (705) and a noise reduction filter (707),
wherein the noise suppression circuit (705) includes an edge identification circuit (701) configured to identify edges of the input image signal (IIMG) and map each of the edges to an edge index, and a noise variance circuit (703) configured to calculate a variance of pixel value data in the image information signal (IMG_IF).

9. The image signal processor of claim 8, wherein the noise suppression circuit (705) is configured to identify a first noise signal in the image information signal (IMG_IF) based on a result of comparing the edge index with the variance of the pixel value data and change a size of pixel value data corresponding to the first noise signal according to a preset method.

10. The image signal processor of claim 9, wherein the noise reduction filter (707) is configured to:
identify a second noise signal in the pixel value data in the image information signal output from the noise suppression circuit (705), the second noise signal corresponding to a piece of pixel value data, wherein a difference value between the piece of pixel value data and neighboring pixel value data is greater than or equal to a threshold value, and
remove the piece of pixel value data corresponding to the second noise signal from the image information signal.

11. An operating method of an image signal processor (120) including a first recomposition circuit (124-1) and a second recomposition circuit (124-2), the operating method comprising:
generating a first image signal (IMG1) by down-scaling an input image signal (IIMG);
generating, by the first recomposition circuit (124-1), a target image signal based on the first image signal (IMG1);
generating a second image signal (IMG2) by performing at least one image processing on the target image signal;
generating a third image signal (IMG3) by up-scaling the second image signal (IMG2);
**characterised by**, generating a fourth image signal (IMG4) by up-scaling the first image signal (IMG1):
generating an image information signal (IMG_IF) by extracting, from the input image signal (IIMG) and the fourth image signal (IMG4), information about image quality loss of the first image signal (IMG1), wherein the image information signal (IMG_IF) includes information representing a high-frequency component of the input image signal (IIMG), corresponding to correction information for correcting image quality loss involved in scaling and image processing; and
generating, by the second recomposition circuit (124-2), an output image signal (OIMG) based on the third image signal (IMG3),
wherein, in a first mode, the image information signal (IMG_IF) is transmitted to the first recomposition circuit (124-1) and, in a second mode, the image information signal (IMG_IF) is transmitted to the second recomposition circuit (124-2), wherein the first mode includes an image quality priority mode for decreasing image quality loss of the output signal (OIMG) during image processing and the second mode includes a power priority mode for decreasing power consumption during image processing.

12. The operating method of claim 11, wherein:
generating the image information signal (IMG_IF) includes performing a differential operation on the fourth image signal (IMG4) and the input image signal (IIMG).

13. An application processor (200) comprising:
the image signal processor of claim 1, further comprising:
a decomposition circuit (121) configured to generate the first image signal (IMG1) and the image information signal (IMG_IF) based on the input image signal (IIMG), the first image signal (IMG1) including a low-frequency component of the input image signal (IIMG); and
a memory (160) configured to store the image information signal (IMG_IF).

14. The application processor of claim 13,
wherein, when the operation mode of the image signal processor is the first mode:
the first recomposition circuit (124-1) is configured to generate the target image signal by recomposing the first image signal (IMG1) and the image information signal (IMG_IF); and
the second recomposition circuit (124-2) is configured to generate the output image signal (OIMG) by outputting the third image signal (IMG3) as the output image signal, and
wherein, when the operation mode of the image signal processor is the second mode:
the first recomposition circuit (124-1) is configured to generate the target image signal by outputting the first image signal (IMG1) as the target image signal; and
the second recomposition circuit (124-2) is configured to generate the output image signal (OIMG) by recomposing the third image signal (IMG3) and the image information signal (IMG_IF).

## Patentansprüche

1. Bildsignalprozessor (120), umfassend:
eine Herunterskalierungsschaltung (125), die so konfiguriert ist, dass sie ein erstes Bildsignal (IMG1) durch Herunterskalieren eines Eingangsbildsignals (IIMG) erzeugt;
eine Bildverarbeitungsmaschine (122), die eine erste Rekompositionsschaltung (124-1), die so konfiguriert ist, dass sie auf der Grundlage des ersten Bildsignals (IMG1) ein Zielbildsignal erzeugt, und eine Vielzahl von Verarbeitungsmodulen, die so konfiguriert sind, dass sie durch die Durchführung mindestens einer Bildverarbeitung an dem Zielbildsignal ein zweites Bildsignal (IMG2) erzeugen, einschließt;
eine erste Hochskalierungsschaltung (123), die so konfiguriert ist, dass sie ein drittes Bildsignal (IMG3) durch Hochskalieren des zweiten Bildsignals (IMG2) erzeugt;
eine zweite Rekompositionsschaltung (124-2), die so konfiguriert ist, dass sie ein Ausgangsbildsignal (OIMG) auf der Grundlage des dritten Bildsignals (IMG3) erzeugt;
**gekennzeichnet durch**
eine zweite Hochskalierungsschaltung (126), die so konfiguriert ist, dass sie durch Hochskalieren des ersten Bildsignals (IMG1) ein viertes Bildsignal (IMG4) erzeugt; und
eine Korrekturinformationserzeugungsschaltung (127), die zu Folgendem konfiguriert ist:
ein Bildinformationssignal (IMG_IF) durch Extrahieren von Informationen über einen Bildqualitätsverlust des ersten Bildsignals (IMG1) aus dem Eingangsbildsignal (IIMG) und dem vierten Bildsignal (IMG4) zu erzeugen, wobei das Bildinformationssignal (IMG_IF) Informationen einschließt, die eine Hochfrequenzkomponente des Eingangsbildsignals (IIMG) darstellen, entsprechend Korrekturinformationen zum Korrigieren eines Bildqualitätsverlustes, der durch Skalierung und Bildverarbeitung bedingt ist;
in einem ersten Modus das Bildinformationssignal (IMG_F) zur ersten Rekompositionsschaltung (124-1) zu übertragen, wobei der erste Modus einen Bildqualitätsprioritätsmodus zur Verringerung des Bildqualitätsverlusts des Ausgangssignals (OIMG) während Bildverarbeitung einschließt; und
in einem zweiten Modus das Bildinformationssignal (IMG_F) zur zweiten Rekompositionsschaltung (124-2) zu übertragen, wobei der zweite Modus einen Energieprioritätsmodus zur Verringerung des Energieverbrauchs während Bildverarbeitung einschließt.

2. Bildsignalprozessor nach Anspruch 1, wobei im ersten Modus die erste Rekompositionsschaltung (124-1) weiter so konfiguriert ist, dass sie das Zielbildsignal durch erneutes Zusammensetzen des ersten Bildsignals (IMG1) und des Bildinformationssignals (IMG_IF) erzeugt.

3. Bildsignalprozessor nach Anspruch 2, wobei im ersten Modus die zweite Rekompositionsschaltung (124-2) weiter so konfiguriert ist, dass sie das dritte Bildsignal (IMG3) als das Ausgangsbildsignal (OIMG) ausgibt.

4. Bildsignalprozessor nach einem vorstehenden Anspruch, wobei im zweiten Modus die erste Rekompositionsschaltung (124-1) weiter so konfiguriert ist, dass sie das erste Bildsignal (IMG1) als das Zielbildsignal ausgibt, und
die zweite Rekompositionsschaltung (124-2) weiter so konfiguriert ist, dass sie das Ausgangsbildsignal (OIMG) durch erneutes Zusammensetzen des dritten Bildsignals (IMG3) und des Bildinformationssignals (IMG_IF) erzeugt.

5. Bildsignalprozessor nach einem vorstehenden Anspruch, wobei im ersten Modus die Korrekturinformationserzeugungsschaltung (127) weiter so konfiguriert ist, dass sie mindestens eines von Rauschunterdrückung und Helligkeitsverbesserung durchführt, entsprechend der mindestens einen Bildverarbeitung, die von der Bildverarbeitungsmaschine (122) durchgeführt wird.

6. Bildsignalprozessor nach einem vorstehenden Anspruch, wobei im zweiten Modus die Korrekturinformationserzeugungsschaltung (127) weiter so konfiguriert ist, dass sie mindestens eines von Rauschunterdrückung, Helligkeitsverbesserung und Schärfeverbesserung durchführt, und
wobei, wenn die Helligkeitsverbesserung und die Schärfeverbesserung durchgeführt werden, sowohl die Helligkeitsverbesserung als auch die Schärfeverbesserung der mindestens einem Bildverarbeitung entspricht, die von der Bildverarbeitungsmaschine (122) durchgeführt wird.

7. Bildsignalprozessor nach einem vorstehenden Anspruch, wobei eine von der ersten Rekompositionsschaltung (124-1) und der zweiten Rekompositionsschaltung (124-2) mindestens eine von einer radialen Korrekturschaltung (128-2) umfasst, die zum Korrigieren des Bildinformationssignals (IMG_IF) konfiguriert ist, einer Verstärkungsregelungsschaltung (129) und einer Rauschunterdrückungsschaltung (128-1) einschließt.

8. Bildsignalprozessor nach Anspruch 7, wobei der Bildsignalprozessor weiter eine Rauschunterdrückungsschaltung (705) und einen Rauschunterdrückungsfilter (707) einschließt,
wobei die Rauschunterdrückungsschaltung (705) eine Kantenerkennungsschaltung (701), die so konfiguriert ist, dass sie Kanten des Eingangsbildsignals (IIMG) identifiziert und jede von den Kanten einem Kantenindex zuordnet, und eine Rauschvarianzschaltung (703), die so konfiguriert ist, dass sie eine Varianz von Pixelwertdaten im Bildinformationssignal (IMG_IF) berechnet, einschließt.

9. Bildsignalprozessor nach Anspruch 8, wobei die Rauschunterdrückungsschaltung (705) so konfiguriert ist, dass sie ein erstes Rauschsignal im Bildinformationssignal (IMG_IF), basierend auf einem Ergebnis eines Vergleichens des Kantenindex mit der Varianz der Pixelwertdaten und einer Änderung einer Größe von Pixelwertdaten, die dem ersten Rauschsignal entspricht, gemäß einem voreingestellten Verfahren identifiziert.

10. Bildsignalprozessor nach Anspruch 9, wobei der Rauschunterdrückungsfilter (707) zu Folgendem konfiguriert ist:
ein zweites Rauschsignal in den Pixelwertdaten in den von der Rauschunterdrückungsschaltung (705) ausgegebenen Bildinformationssignal zu identifizieren, wobei das zweite Rauschsignal einem Teil von Pixelwertdaten entspricht, wobei ein Differenzwert zwischen dem Teil von Pixelwertdaten und benachbarten Pixelwertdaten größer als einem Schwellenwert oder diesem gleich ist, und
den Teil von Pixelwertdaten, der dem zweiten Rauschsignal entspricht, aus dem Bildinformationssignal zu entfernen.

11. Betriebsverfahren eines Bildsignalprozessors (120), der eine erste Rekompositionsschaltung (124-1) und eine zweite Rekompositionsschaltung (124-2) einschließt, wobei das Betriebsverfahren Folgendes umfasst:
Erzeugen eines ersten Bildsignals (IMG1) durch Herunterskalieren eines Eingangsbildsignals (IIMG);
Erzeugen, durch die erste Rekompositionsschaltung (124-1), eines Zielbildsignals basierend auf dem ersten Bildsignal (IMG1);
Erzeugen eines zweiten Bildsignals (IMG2) durch Durchführen mindestens einer Bildverarbeitung an dem Zielbildsignal;
Erzeugen eines dritten Bildsignals (IMG3) durch Hochskalieren des zweiten Bildsignals (IMG2);
**gekennzeichnet durch**
Erzeugen eines vierten Bildsignals (IMG4) durch Hochskalieren des ersten Bildsignals (IMG1);
Erzeugen eines Bildinformationssignals (IMG_IF) durch Extrahieren von Informationen über einen Bildqualitätsverlust des ersten Bildsignals (IMG1) aus dem Eingangsbildsignal (IIMG) und dem vierten Bildsignal (IMG4), wobei das Bildinformationssignal (IMG_IF) Informationen einschließt, die eine Hochfrequenzkomponente des Eingangsbildsignals (IIMG) darstellen, entsprechend Korrekturinformationen zum Korrigieren eines Bildqualitätsverlusts, der durch Skalierung und Bildverarbeitung bedingt ist; und
Erzeugen, durch die zweite Rekompositionsschaltung (124-2), eines Ausgangsbildsignals (OIMG) auf Grundlage des dritten Bildsignals (IMG3),
wobei in einem ersten Modus das Bildinformationssignal (IMG IF) an die erste Rekompositionsschaltung (124-1) übertragen wird und in einem zweiten Modus das Bildinformationssignal (IMG_IF) an die zweite Rekompositionsschaltung (124-2) übertragen wird, wobei der erste Modus einen Bildqualitätsprioritätsmodus zum Verringern eines Bildqualitätsverlusts des Ausgangssignals (OIMG) während Bildverarbeitung einschließt und der zweite Modus einen Energieprioritätsmodus zur Verringerung des Energieverbrauchs während Bildverarbeitung einschließt.

12. Verfahren nach Anspruch 11, wobei:
Erzeugen des Bildinformationssignals (IMG_IF) Durchführen einer Differenzoperation an dem vierten Bildsignal (IMG4) und dem Eingangsbildsignal (IIMG) einschließt.

13. Anwendungsprozessor (200), umfassend:
den Bildsignalprozessor nach Anspruch 1, weiter umfassend:
eine Zerlegungsschaltung (121), die so konfiguriert ist, dass sie das erste Bildsignal (IMG1) und das Bildinformationssignal (IMG_IF) erzeugt, basierend auf dem Eingangsbildsignal (IIMG), dem ersten Bildsignal (IMG1), einschließlich einer Niederfrequenzkomponente des Eingangsbildsignals (IIMG); und
einen Speicher (160), der zum Speichern des Bildinformationssignals (IMG_IF) konfiguriert ist.

14. Anwendungsprozessor nach Anspruch 13,
wobei, wenn der Betriebsmodus des Bildsignalprozessors der erste Modus ist:
die erste Rekompositionsschaltung (124-1) so konfiguriert ist, dass sie das Zielbildsignal durch erneutes Zusammensetzen des ersten Bildsignals (IMG1) und des Bildinformationssignals (IMG_IF) erzeugt; und
die zweite Rekompositionsschaltung (124-2) so konfiguriert ist, dass sie das Ausgangsbildsignal (OIMG) erzeugt, indem sie das dritte Bildsignal (IMG3) als das Ausgangsbildsignal ausgibt, und
wobei, wenn der Betriebsmodus des Bildsignalprozessors der zweite Modus ist:
die erste Rekompositionsschaltung (124-1) so konfiguriert ist, dass sie das Zielbildsignal erzeugt, indem sie das erste Bildsignal (IMG1) als das Zielbildsignal ausgibt; und
die zweite Rekompositionsschaltung (124-2) so konfiguriert ist, dass sie das Ausgangsbildsignal (OIMG) durch erneutes Zusammensetzen des dritten Bildsignals (IMG3) und des Bildinformationssignals (IMG_IF) erzeugt.

## Revendications

1. Processeur de signal d'image (120) comprenant :
un circuit de réduction d'échelle (125) configuré pour générer un premier signal d'image (IMG1) en réduisant d'échelle un signal d'image d'entrée (IIMG) ;
un moteur de traitement d'images (122) incluant un premier circuit de recomposition (124-1) configuré pour générer un signal d'image cible sur la base du premier signal d'image (IMG1), et une pluralité de modules de traitement configurés pour générer un deuxième signal d'image (IMG2) en effectuant au moins un traitement d'image sur le signal d'image cible ;
un premier circuit d'augmentation d'échelle (123) configuré pour générer un troisième signal d'image (IMG3) en augmentant l'échelle du deuxième signal d'image (IMG2) ;
un second circuit de recomposition (124-2) configuré pour générer un signal d'image de sortie (OIMG) sur la base du troisième signal d'image (IMG3) ;
**caractérisé par**
un deuxième circuit d'augmentation d'échelle (126) configuré pour générer un quatrième signal d'image (IMG4) en augmentant l'échelle du premier signal d'image (IMG1) ; et
un circuit de génération d'informations de correction (127) configuré pour :
générer un signal d'information d'image (IMG_IF) en extrayant, à partir du signal d'image d'entrée (IIMG) et du quatrième signal d'image (IMG4), des informations sur une perte de qualité d'image du premier signal d'image (IMG1), dans lequel le signal d'information d'image (IMG_IF) inclut des informations représentant une composante haute fréquence du signal d'image d'entrée (IIMG), correspondant à des informations de correction pour corriger la perte de qualité d'image impliquée dans la mise à l'échelle et le traitement d'image ;
dans un premier mode, transmettre le signal d'information d'image (IMG_F) au premier circuit de recomposition (124-1), dans lequel le premier mode inclut un mode de priorité de qualité d'image pour réduire la perte de qualité d'image du signal de sortie (OIMG) pendant le traitement d'image ; et
dans un second mode, transmettre le signal d'information d'image (IMG_F) au second circuit de recomposition (124-2), dans lequel le second mode inclut un mode de priorité de puissance pour réduire la consommation d'énergie pendant le traitement d'image.

2. Processeur de signal d'image selon la revendication 1, dans lequel dans le premier mode, le premier circuit de recomposition (124-1) est en outre configuré pour générer le signal d'image cible en recomposant le premier signal d'image (IMG1) et le signal d'information d'image (IMG_IF).

3. Processeur de signal d'image de la revendication 2, dans lequel dans le premier mode, le second circuit de recomposition (124-2) est en outre configuré pour produire le troisième signal d'image (IMG3) comme signal d'image de sortie (OIMG).

4. Processeur de signal d'image selon une quelconque revendication précédente, dans lequel dans le second mode, le premier circuit de recomposition (124-1) est en outre configuré pour produire le premier signal d'image (IMG1) comme signal d'image cible, et
le second circuit de recomposition (124-2) est en outre configuré pour générer le signal d'image de sortie (OIMG) en recomposant le troisième signal d'image (IMG3) et le signal d'information d'image (IMG_IF).

5. Processeur de signal d'image selon une quelconque revendication précédente, dans lequel dans le premier mode, le circuit de génération d'informations de correction (127) est en outre configuré pour effectuer au moins une des opérations suivantes : la réduction du bruit et l'amélioration de la luminosité correspondant à l'au moins un traitement d'image effectué par le moteur de traitement d'image (122).

6. Processeur de signal d'image selon une quelconque revendication précédente, dans lequel dans le second mode, le circuit de génération d'informations de correction (127) est en outre configuré pour effectuer au moins une des opérations suivantes : la réduction du bruit, l'amélioration de la luminosité et l'amélioration de la netteté, et
dans lequel lorsque l'amélioration de la luminosité et l'amélioration de la netteté sont effectuées, chacune des améliorations de luminosité et de netteté correspond à l'au moins un traitement d'image effectué par le moteur de traitement d'image (122).

7. Processeur de signal d'image selon une quelconque revendication précédente, dans lequel l'un du premier circuit de recomposition (124-1) et du second circuit de recomposition (124-2) inclut au moins un circuit parmi un circuit de correction radiale (128-2) configuré pour corriger le signal d'information d'image (IMG_IF), un circuit de commande de gain (129) et un circuit de réduction du bruit (128-1).

8. Processeur de signal d'image selon la revendication 7, dans lequel le processeur de signal d'image inclut en outre un circuit de suppression du bruit (705) et un filtre de réduction du bruit (707),
dans lequel le circuit de suppression du bruit (705) inclut un circuit d'identification des contours (701) configuré pour identifier les contours du signal d'image d'entrée (IIMG) et associer chacun des contours à un index de contour, et un circuit de variance du bruit (703) configuré pour calculer une variance des données de valeur de pixel dans le signal d'information d'image (IMG_IF).

9. Processeur de signal d'image selon la revendication 8, dans lequel le circuit de suppression du bruit (705) est configuré pour identifier un premier signal de bruit dans le signal d'information d'image (IMG_IF) en se basant sur un résultat de la comparaison de l'indice de contour avec la variance des données de valeur de pixel et modifier la taille des données de valeur de pixel correspondant au premier signal de bruit selon une procédé prédéfini.

10. Processeur de signal d'image selon la revendication 9, dans lequel le filtre de réduction du bruit (707) est configuré pour :
identifier un second signal de bruit dans les données de valeur de pixel du signal d'information d'image émis par le circuit de suppression du bruit (705), le second signal de bruit correspondant à une donnée de valeur de pixel, dans lequel une valeur de différence entre la donnée de valeur de pixel et la donnée de valeur de pixel voisine est supérieure ou égale à une valeur seuil, et
supprimer du signal d'information de l'image la donnée de valeur de pixel correspondant au second signal de bruit.

11. Procédé de fonctionnement d'un processeur de signal d'image (120) incluant un premier circuit de recomposition (124-1) et un second circuit de recomposition (124-2), le procédé de fonctionnement comprenant :
la génération d'un premier signal d'image (IMG1) par réduction d'échelle d'un signal d'image d'entrée (IIMG) ;
la génération, par le premier circuit de recomposition (124-1), d'un signal d'image cible sur la base du premier signal d'image (IMG1) ;
la génération d'un deuxième signal d'image (IMG2) en effectuant au moins un traitement d'image sur le signal d'image cible ;
la génération d'un troisième signal d'image (IMG3) en augmentant l'échelle du deuxième signal d'image (IMG2) ;
**caractérisé par**
la génération d'un quatrième signal d'image (IMG4) en augmentant l'échelle du premier signal d'image (IMG1) ;
la génération d'un signal d'information d'image (IMG_IF) en extrayant, à partir du signal d'image d'entrée (IIMG) et du quatrième signal d'image (IMG4), des informations sur la perte de qualité d'image du premier signal d'image (IMG1), dans lequel le signal d'information d'image (IMG_IF) inclut des informations représentant une composante haute fréquence du signal d'image d'entrée (IIMG), correspondant aux informations de correction permettant de corriger la perte de qualité d'image liée à la mise à l'échelle et au traitement d'image ;
la génération, par le second circuit de recomposition (124-2), d'un signal d'image de sortie (OIMG) sur la base du troisième signal d'image (IMG3),
dans lequel dans un premier mode, le signal d'information d'image (IMG IF) est transmis au premier circuit de recomposition (124-1) et dans un second mode, le signal d'information d'image (IMG_IF) est transmis au second circuit de recomposition (124-2), dans lequel le premier mode inclut un mode de priorité de qualité d'image pour réduire la perte de qualité d'image du signal de sortie (OIMG) pendant le traitement d'image et le second mode inclut un mode de priorité de puissance pour réduire la consommation d'énergie pendant le traitement d'image.

12. Procédé de fonctionnement selon la revendication 11, dans lequel :
la génération du signal d'information d'image (IMG_IF) inclut l'exécution d'une opération différentielle sur le quatrième signal d'image (IMG4) et le signal d'image d'entrée (IIMG).

13. Processeur d'application (200) comprenant :
le processeur de signal d'image selon la revendication 1, comprenant en outre :
un circuit de décomposition (121) configuré pour générer le premier signal d'image (IMG1) et le signal d'information d'image (IMG_IF) sur la base du signal d'image d'entrée (IIMG), le premier signal d'image (IMG1) incluant une composante basse fréquence du signal d'image d'entrée (IIMG) ; et
une mémoire (160) configurée pour enregistrer le signal d'information d'image (IMG_IF).

14. Processeur d'application de la revendication 13,
dans lequel lorsque le mode de fonctionnement du processeur de signal d'image est le premier mode :
le premier circuit de recomposition (124-1) est configuré pour générer le signal d'image cible en recomposant le premier signal d'image (IMG1) et le signal d'information d'image (IMG_IF) ; et
le second circuit de recomposition (124-2) est configuré pour générer le signal d'image de sortie (OIMG) en produisant le troisième signal d'image (IMG3) comme signal d'image de sortie, et
dans lequel lorsque le mode de fonctionnement du processeur de signal d'image est le second mode :
le premier circuit de recomposition (124-1) est configuré pour générer le signal d'image cible en utilisant le premier signal d'image (IMG1) comme signal d'image cible ; et
le second circuit de recomposition (124-2) est configuré pour générer le signal d'image de sortie (OIMG) en recomposant le troisième signal d'image (IMG3) et le signal d'information d'image (IMG_IF).
